# EUROPEAN PATENT APPLICATION

(11) **EP 4 757 204 A1**
(43) Date of publication of application: **10.06.2026**
(21) Application number: 25221900.1
(22) Date of filing: 09.12.2025
(51) Int. Cl.: H04B 7/185

(54) **APPARATUS AND METHOD FOR STORE AND FORWARD IN INTERNET OF THINGS NON TERRESTRIAL NETWORK**

(30) Priority: 09.12.2024 KR 20240181350; 08.12.2025 KR 20250193233
(71) Applicant: Thinkware Corporation, Seongnam-si, Gyeonggi-do 13493 (KR)
(72) Inventor: HAN, Taekyu, 13493 Seongnam-si, Gyeonggi-do (KR); LIM, Donghee, 13493 Seongnam-si, Gyeonggi-do (KR); KIM, Daewon, 13493 Seongnam-si, Gyeonggi-do (KR)
(74) Representative: BCKIP Part mbB

(57) **Abstract**

According to embodiments of the present disclosure, a device of a satellite configured to provide a non-terrestrial network (NTN) access and to perform functions of an evolved node B (eNB) is provided. The device includes memory comprising instructions, at least one processor, and at least one transceiver. The instructions, when executed by the at least one processor, cause the device to identify a store and forward (S&F) mode in a radio resource control (RRC) connection state with a user equipment (UE), transmit, to the UE, a message indicating that the satellite operates in the S&F mode, after transmitting the message, receive, from the UE, a request signal for a release of the RRC connection, and transmit, to the UE, an RRC connection release message for releasing the RRC connection. The RRC connection release message includes a cause value of the release of the RRC connection. The message includes at least one of an indicator indicating that a cell provided by the satellite supports the S&F mode, information on a validity time of a feeder link of the satellite, or information on a condition for triggering a request of the release of the RRC connection.

## Description

### [Technical Field]

The present disclosure relates generally to a non-terrestrial network (NTN) that provides a wireless communication service through a satellite located in an Earth orbit, rather than a ground base station, or through an aerial vehicle that flies at a high altitude. More specifically, it relates to an apparatus and a method for Store and Forward (S&F) in Internet of Things (IoT) non-terrestrial networks (NTN).

### [Background Art]

To complement a terrestrial network that provides a wireless communication system, a non-terrestrial network (NTN) has been introduced. The non-terrestrial network may provide a communication service even in a region where it is difficult to establish the terrestrial network or in a disaster situation. In addition, due to a decrease in a satellite launch cost in recent years, an access network environment may be efficiently provided.

### [Disclosure]

### [Technical Solution]

According to embodiments of the present disclosure, a device of a satellite configured to provide a non-terrestrial network (NTN) access and to perform functions of an evolved node B (eNB) is provided. The device may comprise memory comprising instructions, at least one processor, and at least one transceiver. The instructions, when executed by the at least one processor, may cause the device to identify a store and forward (S&F) mode in a radio resource control (RRC) connection state with a user equipment (UE), transmit, to the UE, a message indicating that the satellite operates in the S&F mode, after transmitting the message, receive, from the UE, a request signal for a release of the RRC connection, and transmit, to the UE, an RRC connection release message for releasing the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to embodiments of the present disclosure, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB) in a radio resource control (RRC) connection state, a message indicating that the satellite operates in a store and forward (S&F) mode, after receiving the message, transmit, to the satellite, a request signal for a release of the RRC connection, receive, from the satellite, an RRC connection release message regarding the release of the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to embodiments of the present disclosure, a method performed by a satellite configured to provide a non-terrestrial network (NTN) access and perform functions of an evolved node B (eNB) is provided. The method may comprise identifying a store and forward (S&F) mode in a radio resource control (RRC) connection state with a user equipment (UE), transmitting, to the UE, a message indicating that the satellite operates in the S&F mode, after transmitting the message, receiving, from the UE, a request signal for a release of the RRC connection, transmitting, to the UE, an RRC connection release message for releasing the RRC connection, and the RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to embodiments of the present disclosure, a method performed by a user equipment (UE) for performing a non-terrestrial network (NTN) access is provided. The method may comprise receiving, from a satellite configured to perform functions of an evolved node B (eNB) in a radio resource control (RRC) connection state, a message indicating that the satellite operates in a store and forward (S&F) mode, after receiving the message, transmitting, to the satellite, a request signal for a release of the RRC connection, and receiving, from the satellite, an RRC connection release message regarding the release of the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

### [Description of the Drawings]

FIG. 1 illustrates a wireless communication system.
FIGS. 2A and 2B illustrate an example of a non-terrestrial network (NTN).
FIG. 3A illustrates an example of a control plane (C-plane).
FIG. 3B illustrates an example of a user plane (U-plane).
FIG. 4 illustrates an example of a resource structure in a time-frequency domain in a wireless communication system.
FIG. 5 indicates an example of a store and forward (S&F) mode in an Internet of Things (IoT) non-terrestrial network (NTN).
FIG. 6 indicates signaling of information on a valid time of an S&F mode.
FIG. 7 indicates an example of a radio resource control (RRC) connection state of an IoT user equipment (UE).
FIG. 8A indicates an example of a release of an RRC connection in an S&F mode.
FIG. 8B indicates an example of a request for a release of an RRC connection in an S&F mode.
FIG. 9 illustrates an example of components of a UE.
FIG. 10 illustrates an example of components of a satellite.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE), a resource block (RB), a bandwidth part (BWP), or an occasion), terms referring for a calculation state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the present disclosure, the expression 'transmitting a physical channel' may be interpreted equally to the expression 'transmitting data or a signal through a physical channel'.

Hereinafter, in the present disclosure, upper signaling means a signal transmission method transmitted from a base station to a terminal using a downlink data channel of a physical layer, or from a terminal to a base station using an uplink data channel of a physical layer. The upper signaling may be understood as radio resource control (RRC) signaling or a MAC control element (hereinafter, referred to as 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

The present disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

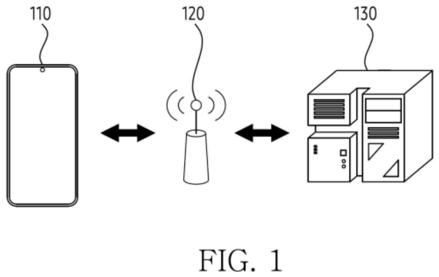

FIG. 1 illustrates a wireless communication system.

Referring to FIG. 1, FIG. 1 illustrates a terminal 110 and a base station 120 as a portion of nodes that utilize a wireless channel in a wireless communication system using an evolved Universal Mobile Telecommunications System (UMTS) radio access network (EUTRAN) or New Radio (NR), as a wireless interface of Radio Access Technology (RAT). FIG. 1 illustrates only one base station, but the wireless communication system may further include another base station identical or similar to the base station (e.g., LTE eNB or NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may perform communication with each other through a wireless channel. At this time, a device-to-device link (D2D) between the terminal 110 and the other terminal is referred to as a sidelink, and the sidelink may be used interchangeably with a PC5 interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-Internet of things (IoT) device.

In describing the systems and methods in the present specification, the terminal 110 may be an electronic device used to communicate voice and/or data to the base station 120, and the base station 120 may, in turn, communicate with a network (e.g., a public exchange telephone network (PSTN), the Internet, and the like) of devices.

In addition, the terminal 110 may be referred to as a terminal, a 'user equipment (UE)', a 'vehicle', a 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as UE. However, since the scope disclosed in the present specification should not be limited to the 3GPP standards, terms "UE" and "terminal" may be used interchangeably in the present specification to mean a more general term "wireless communication device". The UE may also more generally be referred to as a terminal device.

The base station 120 is a network infrastructure that provides wireless access to the terminal 110. The terminal 110 has coverage defined based on a distance at which a signal may be transmitted. In the 3GPP standards, the base station 120 may generally be referred to as a 'node B', an 'evolved node B (eNodeB, eNB)', a '5th generation node', a 'next generation nodeB (gNB)', a 'home enhanced or evolved node B (HeNB)', an 'access point (AP)', a 'wireless point', a 'transmission/reception point (TRP)', or another term having an equivalent technical meaning thereto.

Since the scope disclosed in the present specification should not be limited to the 3GPP standards, terms "base station", "node B", "eNB", and "HeNB" may be used interchangeably in the present specification to mean a more general term "base station". In addition, the term "base station" may be used to indicate an access point. The access point may be an electronic device that provides access to a network (e.g., a local area network (LAN), the Internet, and the like) for wireless communication devices. The term "communication device" may be used to indicate both a wireless communication device and/or a base station. The eNB or the gNB may also more generally be referred to as a base station device.

The base station 120 may communicate with a core network entity 130. For example, the core network entity 130 may include a mobility management entity (MME) responsible for a control plane, such as a terminal 110 access and mobility control function, and a serving gateway (S-GW) responsible for a control function for user data.

The terminal 110 may perform beamforming with the base station 120. The terminal 110 and the base station 120 may transmit and receive a wireless signal in a relatively low frequency band (e.g., a frequency range 1 (FR 1) of NR). In addition, the terminal 110 and the base station 120 may transmit and receive a wireless signal in a relatively high frequency band (e.g., FR 2 (or, FR 2-1, FR 2-2, FR 2-3), or FR 3 of NR), a millimeter wave (mmWave) band (e.g., 28 GHz, 30 GHz, 38 GHz, or 60 GHz)). In order to improve a channel gain, the terminal 110 and the base station 120 may perform the beamforming. Herein, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform beamforming, but embodiments of the present disclosure are not necessarily limited thereto. In some embodiments, the terminal 110 may or may not perform beamforming. In addition, the base station 120 may or may not perform beamforming. That is, only one of the terminal 110 and the base station 120 may perform beamforming, or both the terminal 110 and the base station 120 may not perform beamforming.

In the present disclosure, a beam, which means a spatial flow of a signal in a wireless channel, may be formed by one or more antennas (or antenna elements), and this formation process may be referred to as beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. The information associated with the beam may mean whether a corresponding configuration (e.g., a CSI-RS resource) uses the same spatial domain filter as another configuration (e.g., another CSI-RS resource in the same CSI-RS resource set), or another spatial domain filter, or which reference signal is quasi-co-located (QCL) with, and if it is QCL, which type (e.g., QCL type A, B, C, and D).

Hereinafter, to describe embodiments, a terminal may be referred to as UE 110, and a base station may be referred to as an eNB 120 or a gNB 120. Hereinafter, in the present disclosure, the eNB 120 is described as an example as a node that provides an access network in order to describe IoT NTN for IoT UE, but it is of course that it may be applied to the gNB 120 in the same or similar manner.

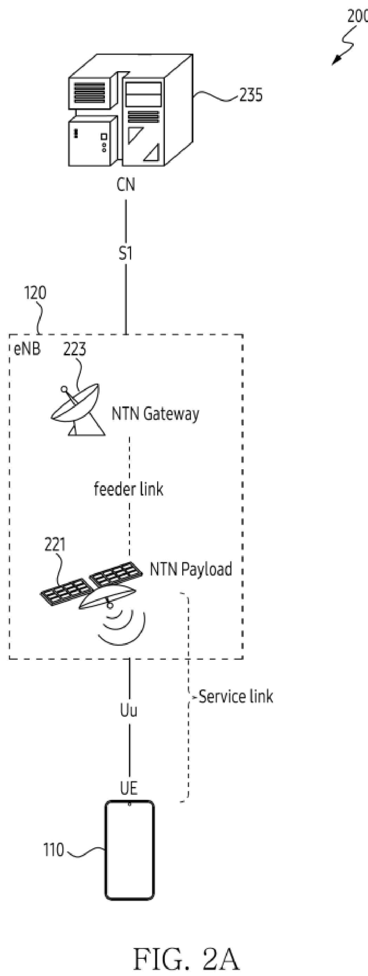

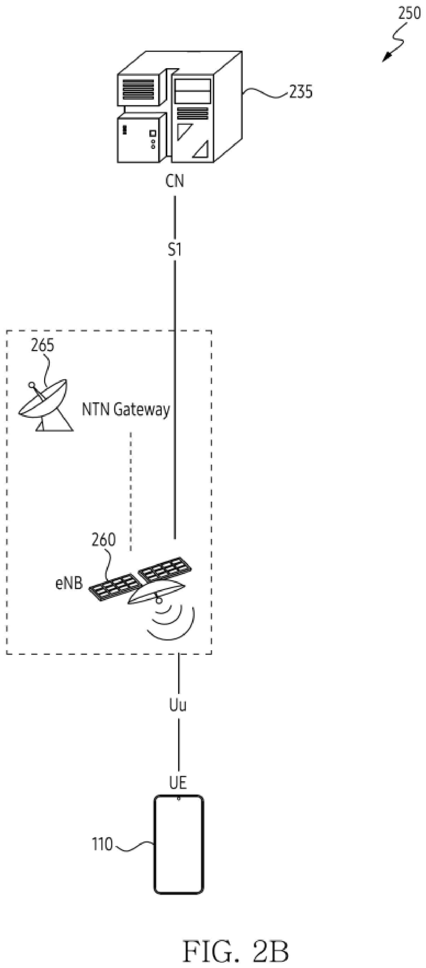

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN refers to an access network that provides non-terrestrial access to UE (e.g., the UE 110) through an NTN payload mounted on an airborne or space-borne NTN vehicle and an NTN gateway. The NG-RAN may include one or more eNBs (e.g., the eNB 120).

Referring to FIG. 2A, NTN 200 indicates a network environment according to the transparent satellite. The NTN 200, as the eNB 120, may include an NTN payload 221 and an NTN gateway 223. The NTN payload 221 is a network node mounted on a phase or a high altitude platform station (HAPS) that provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the UE 110 with non-terrestrial NR access. The NTN 200 may provide the UE 110 with the non-terrestrial NR access through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one eNB 120 from a perspective of the UE 110. The NTN payload 221 and the NTN gateway 223 may perform communication with the UE 110 through a Uu interface, which is a general wireless protocol. That is, the NTN payload 221 and the NTN gateway 223 may perform wireless protocol communication with the UE 110 like the one eNB 120. The NTN gateway 223 may perform communication with a core network entity 235 (e.g., a mobility management entity (MME) or a serving gateway (S-GW)) through an S1 interface.

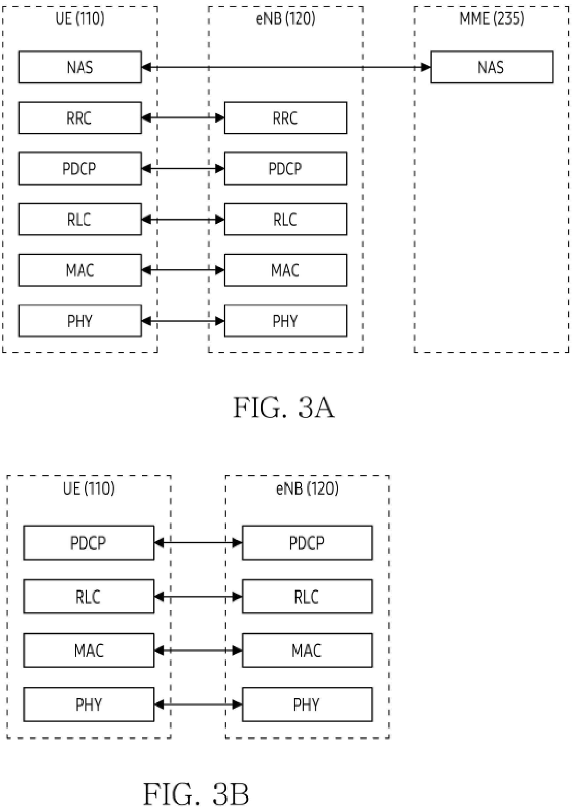

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use a wireless protocol stack in a user plane of FIG. 3B.

In FIG. 2A, one NTN payload 221 and one NTN gateway 223 included in the eNB 120 have been described, but embodiments of the present disclosure are not limited thereto. For example, eNB may include a plurality of NTN payloads. In addition, for example, an NTN payload may be provided by a plurality of eNBs. That is, an implementation scenario illustrated in FIG. 2A is an example and does not limit embodiments of the present disclosure.

Referring to FIG. 2B, an NTN 250 indicates a network environment according to the regenerative satellite. The NTN 250 may include a satellite 260 operating as the eNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 may indicate a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station, disposed on a surface of the earth, that provides a connection to the satellite 260 using the feeder link. The NTN 250 may provide the UE 110 with the non-terrestrial NR access. The NTN 250 may provide the UE 110 with the non-terrestrial NR access through the satellite 260 and the NTN gateway 265.

The satellite 260 may be configured to regenerate signals received from the terminal 110 or the Earth station (e.g., the NTN gateway 265). The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and the ISL may be a 3GPP, or a wireless interface (e.g., an X2 interface or an XN interface) or an optical interface, in which the 3GPP is not defined. The satellite 260 may perform communication with the core network entity 235 (e.g., the MME or the S-GW) through the S1 interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the eNB 120 has been described, but embodiments of the present disclosure are not limited thereto. The eNB 120 according to embodiments may be implemented as a distributed deployment using a centralized unit (CU) configured to perform a function of upper layers (e.g., a packet data convergence protocol (PDCP), or a radio resource control (RRC)) of an access network and a distributed unit (DU) configured to perform a function of lower layers. An interface between the CU and the distributed unit (DU) may be referred to as an F1 interface. The centralized unit (CU) may be in charge of a function of a layer upper than the DU by being connected to one or more DUs. For example, the CU may be in charge of a function of radio resource control (RRC) and packet data convergence protocol (PDCP) layers, and the DU and a radio unit (RU) may be in charge of a function of a lower layer. The DU may be in charge of a function of radio link control (RLC), media access control (MAC), and physical (PHY) layers. In this distributed deployment, the satellite 260 may be used as the CU or the DU constituting the eNB 120.

FIG. 3A illustrates an example of a control plane (C-plane). Hereinafter, at least a portion of descriptions of an eNB 120 may be understood as pertaining to a satellite 260.

Referring to FIG. 3A, in the C-plane, UE 110 and AMF 235 may perform non-access stratum (NAS) signaling. In the C-plane, the UE 110 and the eNB 120 may perform communication according to a protocol specified in each of a RRC layer, a PDCP layer, a RLC layer, a MAC layer, and a PHY layer.

In an NTN access, a main function of the RRC layer may include at least a portion of the following functions.
- Broadcasting access stratum (AS) and NAS related system information
- Paging
- Establishment, maintenance, and release of an RRC connection between the UE and an access network, including, more specifically, control over RLC, MAC, and PHY:
   - Addition, modification and release of Carrier Aggregation
   - Addition, modification and release of dual connectivity between NR or E-UTRA and NR.
- Security function including Key Management;
- Establishment, configuration, maintenance and release of Signaling Radio Bearer (SRB) and Data Radio Bearer (DRB)
- Movement function including:
   - Transferring handover and context;
   - Control UE cell selection and reselection and cell selection and reselection;
   - Mobility between RATs.
- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.
- Header compression and decompression: ROHC only
- Transfer of user data
- In-sequence delivery of upper layer PDUs
- Out-of-sequence delivery of upper layer PDUs
- Duplicate detection of lower layer SDUs
- Retransmission of PDCP SDUs
- Ciphering and deciphering
- Timer-based SDU discard in uplink.

In the NTN access, a main function of the RLC layer may include at least a portion of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In NTN access, each entity (e.g., the terminal 110, or the eNB 120) in the physical layer may perform channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the eNB 120 may be understood as pertaining to the satellite 260.

Referring to FIG. 3B, in the U-plane, the UE 110 and the eNB 120 may perform communication according to a protocol specified in each of the PDCP layer, the RLC layer, the MAC layer, and the PHY layer. For the PDCP layer, the RLC layer, the MAC layer, and the PHY layer, the description regarding FIG. 3A may be referred to.

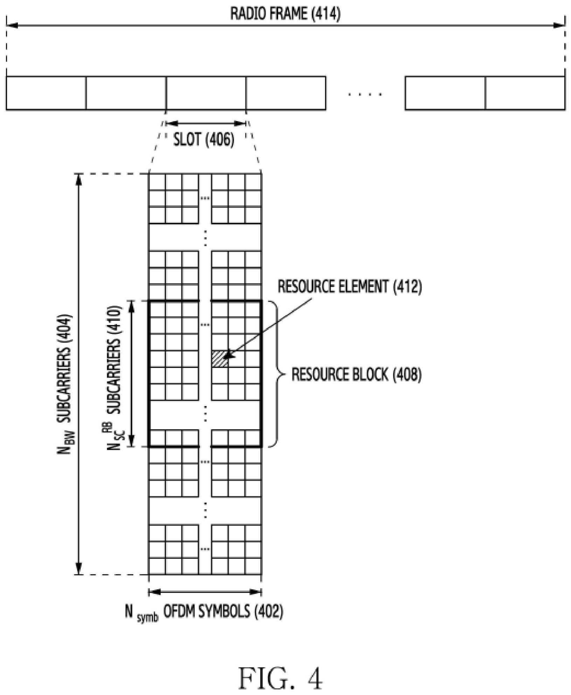

FIG. 4 illustrates an example of a resource structure of a time-frequency domain supported by a wireless communication system to which an embodiment proposed in the present specification may be applied. In FIG. 4, a resource structure of an LTE network for IoT NTN is described as an example, but embodiments of the present disclosure are not limited thereto. It is of course that signaling and related operations according to embodiments of the present disclosure may be applied to an NR system in the same or similar manner.

Referring to FIG. 4, a horizontal axis indicates a time domain, and a vertical axis indicates a frequency domain. A minimum transmission unit in the time domain is an OFDM symbol, and one slot 406 (e.g., 7 in the LTE system) may be configured with N_{symb} OFDM symbols 402. Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, the slot 406 is configured with 14 OFDM symbols, but a length of the slot may vary according to subcarrier spacing. In the wireless communication system in which an invention proposed in the present specification may be applied, a radio resource supported by the wireless communication system is configured with symbols, which are a plurality of time resources, and sub-carriers, which are a plurality of frequency resources, and each time resource and frequency resource may be represented as a two-dimensional resource grid 411. In FIG. 4, one square, which is the smallest physical resource configured with one sub-carrier and one symbol in the resource grid 411, is referred to as a resource element (RE) 412.

In the wireless communication system in which the invention proposed in the present specification may be applied, a minimum transmission unit in the frequency domain is a subcarrier, and a carrier bandwidth that configures a resource grid 411 may be configured with NBW subcarriers 404. A basic unit of a resource in a time-frequency domain is the resource element (RE) 412, and it may be represented by an OFDM symbol index and a subcarrier index. A resource block (RB) 408 may include a plurality of resource elements 412. In the wireless communication system in which the invention proposed in the present specification may be applied, the resource block (RB) 408 (or a physical resource block (PRB)) may be defined with Nsymb (e.g., 7) consecutive OFDM symbols in the time domain and NSCRB (e.g., 12) consecutive subcarriers in the frequency domain. A data rate may increase in proportion to the number of RBs scheduled to a terminal. In a case of a frequency division duplex (FDD) system in which a downlink and an uplink are operated by being distinguished by frequencies, a downlink transmission bandwidth and an uplink transmission bandwidth may be different from each other. A channel bandwidth indicates a radio frequency (RF) bandwidth corresponding to a system transmission bandwidth. For example, a channel bandwidth may be one of 1.4 MHz (e.g., 6 PRBs), 3 MHz (e.g., 15 PRBs), 5 MHz (e.g., 25 PRBs), 10 MHz (e.g., 50 PRBs), 15 MHz (e.g., 75 PRBs), and 20 MHz (e.g., 100 PRBs).

E-UTRAN supports radio access over non-terrestrial networks for not only general UEs, but also bandwidth limited (BL) UEs, UEs in enhanced coverage and NB-IoT UEs. Support for non-terrestrial networks encompasses platforms that provide radio access through Geosynchronous orbits (GSO), Non-Geosynchronous Orbit (NGSO), which includes Low-Earth Orbit (LEO) and Medium Earth Orbit (MEO) or High Altitude Platform Systems (HAPS).

In the transparent payload mode, the NTN gateway and the NTN payload (i.e., satellite) together perform the role of the eNB, and in the regenerative payload mode, the NTN payload (i.e., satellite) can perform the role of the eNB.

The transparent NTN payload transparently forwards the radio protocol received from the UE (via the service link) to the NTN Gateway (via the feeder link) and vice-versa. The regenerative payload terminates the Uu interface (via the service link), S1 and X2 interfaces. An NTN Gateway may serve multiple transparent or regenerative NTN payloads. A transparent or regenerative NTN payload may be served by multiple eNBs. A regenerative NTN payload may terminate one or more inter-satellite links toward other regenerative payloads. As a non-limiting example, the transparent NTN-payload may change the carrier frequency, before re-transmitting it on the service link, and vice versa (respectively on the feeder link). In NTN, a Tracking Area corresponds to a fixed geographical area. In NTN, the same value is used in AS and NAS when the satellite ID referring to the same satellite.

Three types of service links are supported:
- Earth-fixed: provisioned by beam(s) continuously covering the same geographical areas all the time (e.g., the case of GSO satellites);
- Quasi-Earth-fixed: provisioned by beam(s) covering one geographic area for a limited period of time and a different geographic area during another period of time (e.g., the case of NGSO satellites generating steerable beams);
- Earth-moving: provisioned by beam(s) whose coverage area slides over the Earth surface (e.g., the case of NGSO satellites generating fixed or non-steerable beams).

With NGSO satellites, the eNB can provide either quasi-Earth-fixed cell coverage or Earth-moving cell coverage, while eNB operating with GSO satellites can provide Earth fixed cell coverage or quasi-Earth-fixed cell coverage.

Store and forward mode provides communication service to the UE when the serving satellite has a discontinuous connection to the ground network and such connection is not available when the satellite is interacting with the UE. The eNB can indicate whether a cell is operating in store and forward mode.

The Store and Forward Satellite operation mode refers to an operation mode that provides to the UE a communication service when the serving satellite has a discontinuous connection to the NTN gateway and connection to the NTN gateway is not available when the satellite is interacting with the UE.

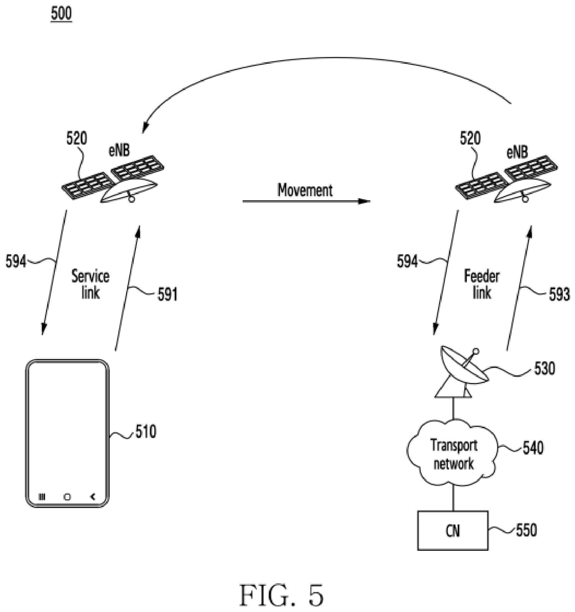

FIG. 5 illustrates an example 500 of a store and forward (S&F) mode in an Internet of Things (IoT) non-terrestrial network (NTN).

Referring to FIG. 5, UE 510 may perform communication with a satellite 520. The UE 510 may be referred to as the terminal 110 of FIG. 1. The satellite 520 may be referred to as a base station 120 or a network entity that performs at least a portion of functions of the base station 120. According to an embodiment, the satellite 520 may be an eNB that provides IoT NTN. The satellite 520 may provide E-UTRAN for an IoT device (e.g., the UE 510). The UE 510 may access the satellite 520 through the E-UTRAN. A connection between the satellite 520 and the UE 510 may be referred to as a service link. The satellite 520 may move along a specified orbit. According to the movement of the satellite 520, the satellite 520 may be connected to a network entity (hereinafter, referred to as a ground segment) (e.g., an NTN gateway 530) disposed on the ground. The connection between the satellite 520 and the NTN gateway 530 may be referred to as a feeder link. The NTN gateway 530 may be connected to a core network 550 through a transport network 540. As the satellite 520 moves repeatedly along the specified orbit, the service link may or may not be available. As the satellite 520 moves repeatedly along the specified orbit, the feeder link may be available or unavailable.

The satellite 520 may support the store and forward (S&F) mode. The store and forward (S&F) mode may indicate an operation mode of a system capable of satellite-access. A delay-tolerant communication service may be provided through the store and forward (S&F) mode. When a satellite connection is intermittently or temporarily unavailable (e.g., in a case of serving the UE 510 positioned in a coverage where a feeder link to the ground segment (e.g., the NTN gateway 530) is not simultaneously active), a level of service that stores and forwards data may be provided. According to an embodiment, the satellite 520 may be used to provide a delay-tolerant IoT service through a non-geostationary satellite orbit (NGSO) (e.g., low earth orbit (LEO)). According to an embodiment, the satellite 520 may provide satellite access to the UE 510 that does not have a global navigation satellite system (GNSS) receiver or has difficulty accessing a GNSS service. As a non-limiting example, the satellite 520 may perform UE-satellite-UE communication with the UE 510. For example, the UE 510 may perform communication with the satellite 520 without communicating with the ground segment (e.g., the NTN gateway 530) in order to avoid long delays and limited data rates and to reduce resource consumption. The S&F mode may be used for the delay-tolerant service and/or an interruption-tolerant service. For example, in a 3GPP context, a short message service (SMS) may be used for the S&F mode, and an end-to-end connection between endpoints (e.g., the UE 510 and an application server) may not be required. Only a connection between an endpoint (e.g., the UE 510) and an intermediate node (e.g., a short message service center (SMSC)) may be required.

In the S&F mode, the service link between the UE 510 and the satellite 520 may repeat an available state and an unavailable state. The service link between the UE 510 and the satellite 520 being in the available state indicates that a position of the satellite 520 belongs to a range (hereinafter, a service-available orbital section) in which the satellite 520 may serve a region (e.g., a footprint) where the UE 510 is positioned on an orbit of the satellite 520. The service link between the UE 510 and the satellite 520 being in the unavailable state indicates that a position of the satellite 520 belongs to a range (hereinafter, a service-unavailable orbital section) in which the satellite 520 has difficulty in serving the region (e.g., the footprint) where the UE 510 is positioned on the orbit of the satellite 520. In the S&F mode, the feeder link between the satellite 520 and the ground segment (e.g., the NTN gateway 530) may repeat between an available state and an unavailable state. The feeder link between the satellite 520 and the ground segment (e.g., the NTN gateway 530) being in the available state indicates that a position of the satellite 520 belongs to a range (hereinafter, a feeder-available orbital section) in which the satellite 520 may serve a region (e.g., a footprint) where the ground segment (e.g., the NTN gateway 530) is positioned on the orbit of the satellite 520. The feeder link between the satellite 520 and the ground segment (e.g., the NTN gateway 530) being in the unavailable state indicates that a position of the satellite 520 belongs to a range (hereinafter, a feeder-unavailable orbital section) in which the satellite 520 has difficulty in serving a region (e.g., the footprint) where the ground segment (e.g., the NTN gateway 530) is positioned on the orbit of the satellite 520. For the UE 510, availability of the service link and availability of the feeder link may not always occur simultaneously. For example, even if a state of the service link changes from the available state to the unavailable state, a state of the feeder link does not necessarily change. For example, even if the state of the feeder link changes from the available state to the unavailable state, the state of the service link does not necessarily change.

According to an embodiment, the UE 510 may transmit a signal. The signal may be mobile originated (MO) data. For example, in operation 591, the UE 510 may transmit uplink data (e.g., PUSCH) to the satellite 520 when the service link is in the available state. The satellite 520 may receive the uplink data from the UE 510. Since the feeder link is not in the available state, the satellite 520 may store the uplink data. Thereafter, the satellite 520 may move. According to the movement, a state of the feeder link may change from the available state to the unavailable state. In operation 592, the satellite 520 may transmit the uplink data through a network entity (e.g., the NTN gateway 530) disposed on the ground. The uplink data may be transmitted to a data network through the core network 550. Hereinafter, a service in which a message originating from the UE 510 is transmitted through the satellite 520 in the S&F mode may be referred to as a mobile originated (MO) service.

According to an embodiment, the satellite 520 may transmit a signal to the UE 510. The signal may be mobile terminated (MT) data. For example, in operation 593, while the feeder link is available, the satellite 520 may receive data from an external device (e.g., a server, or another UE) through the data network and the core network 550 (e.g., UPF). The satellite 520 may move. According to the movement of the satellite 520, a state of the feeder link may change from the available state to the unavailable state. According to the movement of the satellite 520, a state of the service link between the satellite 520 and the UE 510 may change from the unavailable state to the available state. In operation 594, the satellite 520 may transmit downlink data (e.g., PDSCH) to the UE 510 when the service link is in the available state. Hereinafter, a service in which a message is delivered to the UE 510 through the satellite 520 in the S&F mode may be referred to as a mobile terminated (MT) service.

### 1. Indication Signaling related to S&F mode

For the S&F mode, the UE 510 may receive an indication of whether a serving satellite is currently operating in the S&F mode on system information broadcasted from the serving satellite (e.g., the satellite 520). In a satellite system using S&F mode, a state of a feeder link across various RRC states may affect an operation of the UE 510. In terms of the UE 510, the following three scenarios may be possible.
1) Normal operation: the service link and the feeder link are available at the same time
2) S&F operation: Only the service link is available
3) Combined operation: a state of the feeder link is changed at a specific timing within a coverage pass period. As an example, an earth-moving cell (as the satellite moves, a reception coverage on a ground surface is changed).

In order to effectively manage scenarios, the UE 510 should be able to identify a current operation mode through an indication provided in the system information. Therefore, the UE 510 is required to know the following information.
- whether a service satellite supports an S&F connection,
- a feeder state of the service satellite,
- a remaining duration of a current state of the feeder link.

By providing the above-described information, the UE 510 may perform an appropriate operation according to various conditions. If the service satellite supports the S&F connection, the operation of the UE 510 may vary according to the state of the feeder link of the satellite.

In a case that the state of the feeder link is available, the remaining duration may correspond to a valid time of a mode (hereinafter, referred to as a normal mode) to operate in the normal operation. In a case that the state of the feeder link is unavailable, the remaining duration may correspond to a valid time of a mode (i.e., the S&F mode) to operate in the S&F operation. In addition, in a case that the state of the service link is available, duration of the service link may correspond to the valid time of the mode (i.e., the S&F mode) to operate in the S&F operation. Likewise, in a case that the state of the service link is unavailable, the duration of the service link may correspond to a start time of the mode (i.e., the S&F mode) to operate in the S&F operation. Since the UE 510 may know the state of the service link but may not directly know the state of the feeder link, it is required to know the state of the feeder link. In addition, the UE 510 is required to know the duration of the service link. Hereinafter, in embodiments of the present disclosure, a technique for signaling provided on a network side is described to determine how the UE 510 operates in which scenario for the service satellite (e.g., the satellite 520).

According to embodiments of the present disclosure, a network (e.g., an eNB) may indicate store-and-forward mode to a terminal (e.g., a UE) via a SIB1 message. For example, the SIB1 message may include an 'sf-OperationMode' IE. The IE may indicate that the cell is operating in Store and Forward mode. If the field is present, UEs supporting the Store and Forward operation ignores *cellBarred-NTN* and *cellBarred.* The IE may inidcate to the value 'barred' or the value 'notBarred'. The value 'barred' means the cell is barred for NTN connectivity with the Store and Forward operation, as defined in TS 36.304. The value 'notBarred' means the cell allows UEs supporting the Store and Forward operation to access. If the field is absent, the SIB1 message indicates that the NTN cell is operating in normal mode, i.e., not in the Store and Forward mode.

According to embodiments of the present disclosure, a network (e.g., an eNB) may indicate time information related to store-and-forward mode to a terminal (e.g., a UE) via a SIB31. The SIB31 may include satellite assistance information for a serving cell. As the satellite assistance information, ephemeris information, satellite ID, and reference position information may be included in the SIB31. *In an embodiment,* the SIB31 message may include switching time information (e.g., t-ModeSwitching IE). If *sf-OperationMode* is present in *SIB1,* this field indicates the time information on when an NTN cell is going to switch from the Store and Forward Satellite operation mode to the normal mode; otherwise, this field indicates the time information on when an NTN cell is going to switch from the normal mode to the Store and Forward Satellite operation mode.

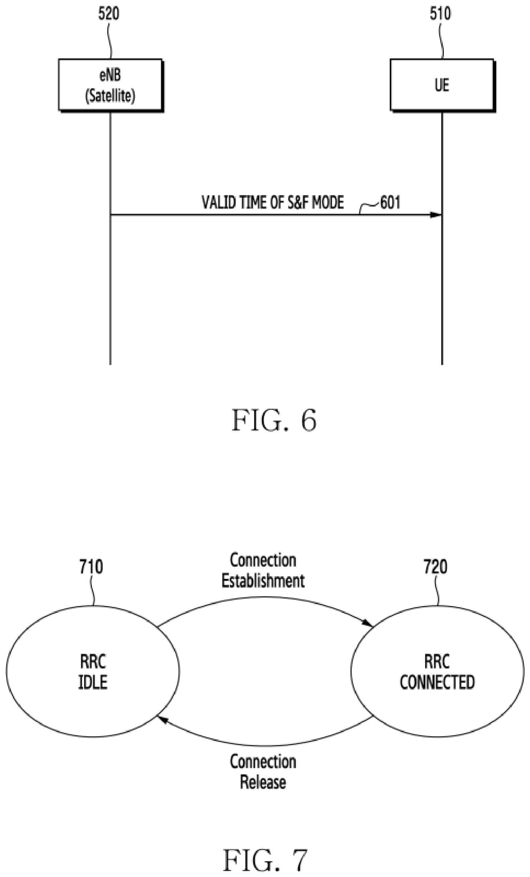

FIG. 6 indicates signaling of information on a valid time of an S&F mode. A satellite 520 may be configured to perform functions of an eNB. As an example, the eNB may be disposed on a board of the satellite 520, and entities of a core network (e.g., a core network 550) may be disposed on the ground. As an example, a portion of the eNB and the entities of the core network (or a portion of a particular entity (e.g., a mobile management entity (MME))) may be disposed on the board of the satellite 520, and other entities of the entities of the core network may be disposed on the ground.

Referring to FIG. 6, in operation 601, the satellite 520 may transmit information on the valid time of the S&F mode to the UE 510. The valid time of the S&F mode may indicate a time when the S&F mode of the satellite 520 is valid. For example, the valid time of the S&F mode may indicate a remaining period until the feeder link of the satellite 520 is unavailable and the unavailability of the feeder link changes to an available state. In this case, the valid time of the S&F mode may be satellite-specific or cell-specific. Since the feeder link is a connection between the satellite 520 and a ground station, the state of the feeder link between the satellite 520 and the ground station may be determined according to an orbit of the satellite 520. Therefore, it is because the satellite 520 may know a timing when the feeder link is expected to be recovered. The valid time of the S&F mode may be indicated independently from the state of the service link.

According to an embodiment, the valid time of the S&F mode may indicate a timing when the connection of the feeder link is resumed. The timing may be indicated as an absolute time. In 3GPP, a 't-service' information element (IE) is defined to indicate a service time of a cell provided by the satellite 520. The 't-service' IE indicates time information on a time to cease a service of an area currently in charge of a cell provided through an NTN system. The IE may be applied to service link switching of an NTN quasi-Earth fixed system and feeder link switching for both the NTN quasi-Earth fixed system and an NTN Earth moving system. The IE indicates a time in a multiple of 10 ms after 00:00:00 on the date January 1, 1900 (midnight between Sunday December 31, 1899 and Monday January 1, 1900) in the Gregorian calendar. An exact ceasing time is between a time indicated by a value of this field minus 1 and a time indicated by the value of this field. A reference point of the IE is an uplink time synchronization reference point of the cell. In this way, the valid time of the S&F mode may be indicated. For example, the valid time of the S&F mode may be indicated to an absolute timing such as the t-service IE. For another example, the valid time of the S&F mode may be indicated in a way such as a hyper frame number (HFN), a system frame number (SFN), a radio frame (RF), a subframe (SF), and/or a symbol index. As an example, the valid time of the S&F mode may be indicated as follows.

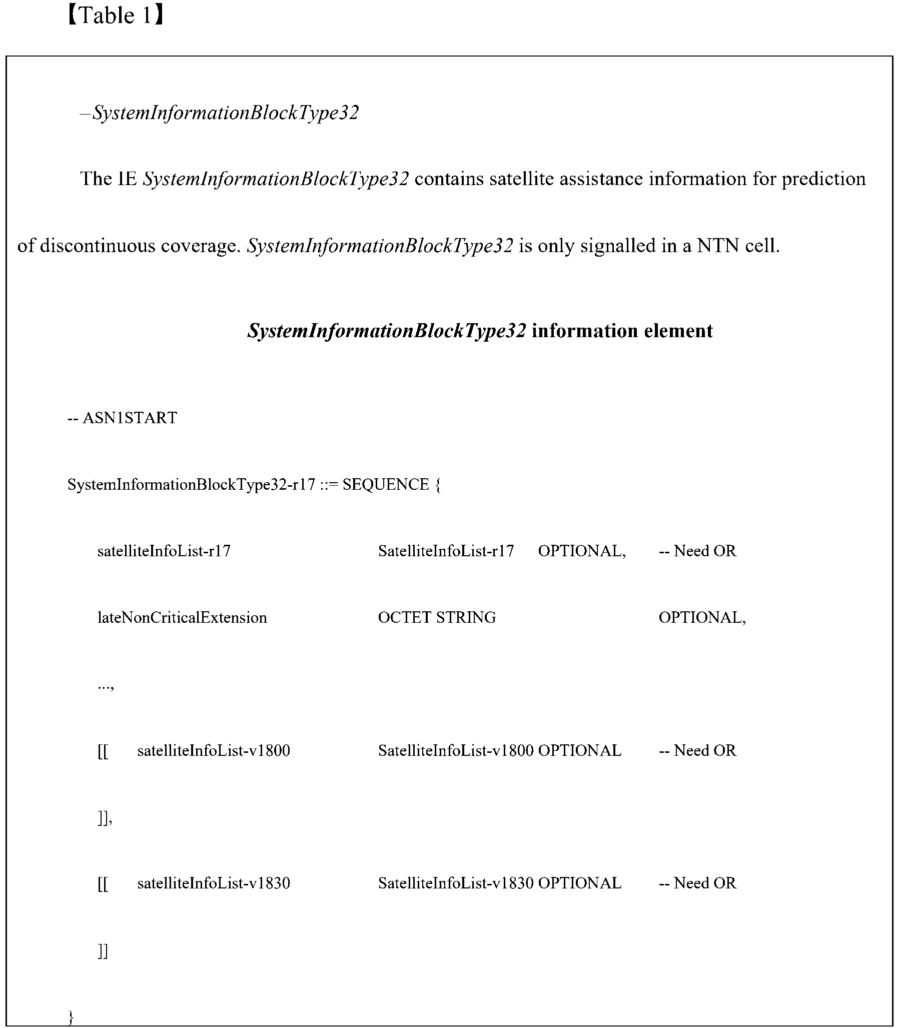

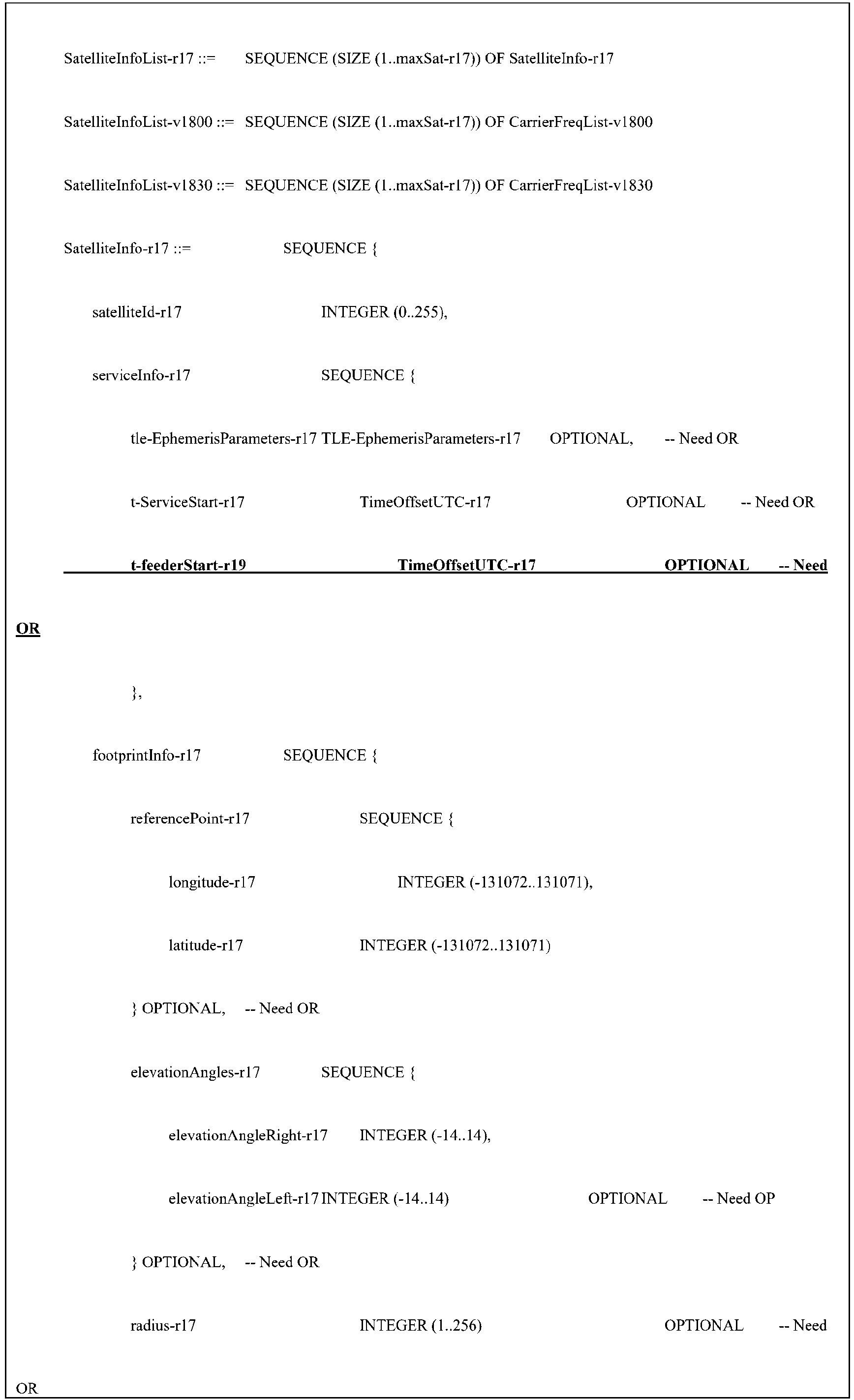

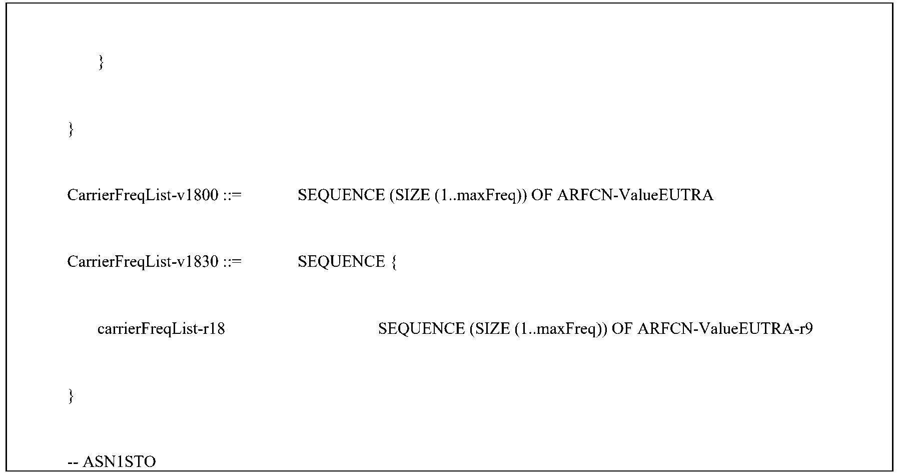

The 't-feederStart-r19' IE may indicate a timing when a feeder link of a cell (i.e., an NTN cell) provided by the satellite 520 is started.

In order to indicate the valid time of the S&F mode not only for the feeder link for the serving satellite but also for a neighboring satellite, a start timing of the feeder link for the neighboring satellite may be indicated.

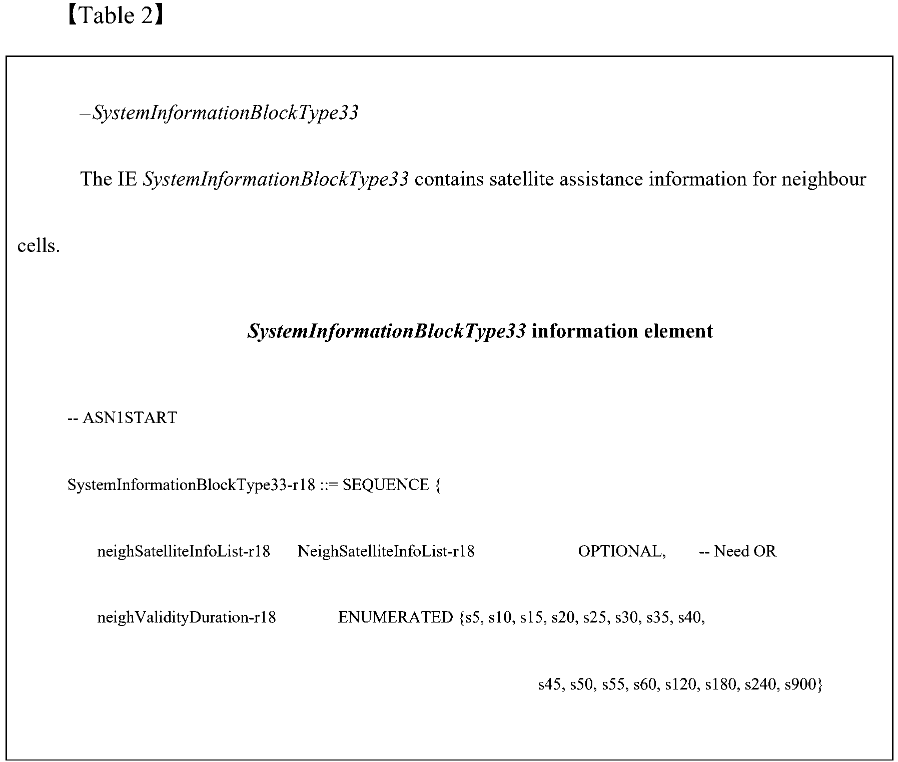

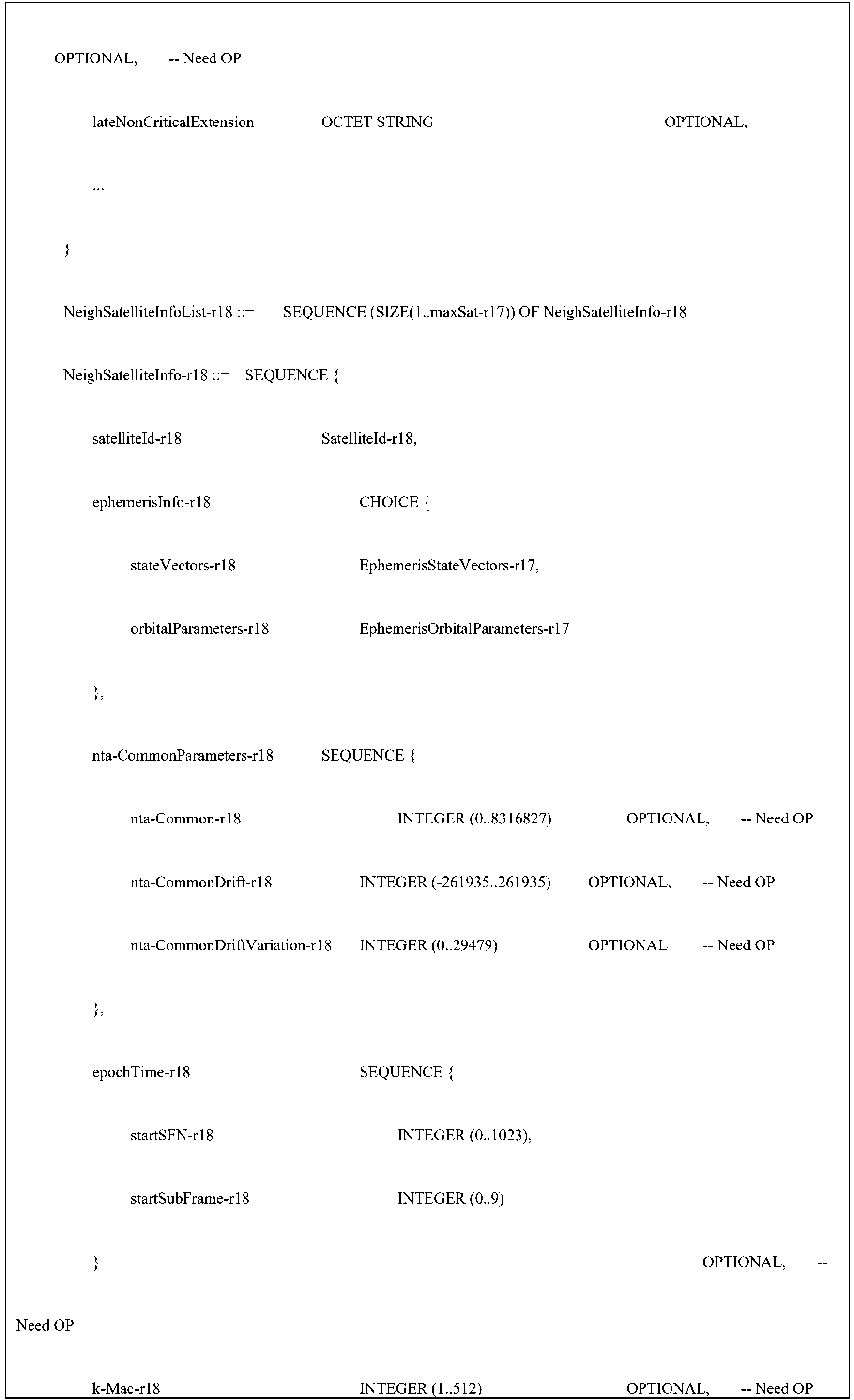

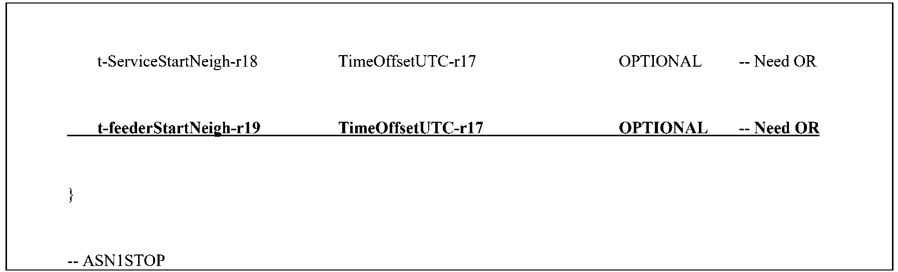

The 't-feederStartNeigh-r19' IE may indicate a timing when a feeder link of a satellite adjacent to the satellite 520 is started.

For information indicating an absolute time, a UTC format may be used. For the UTC format, the following table may be referred to.

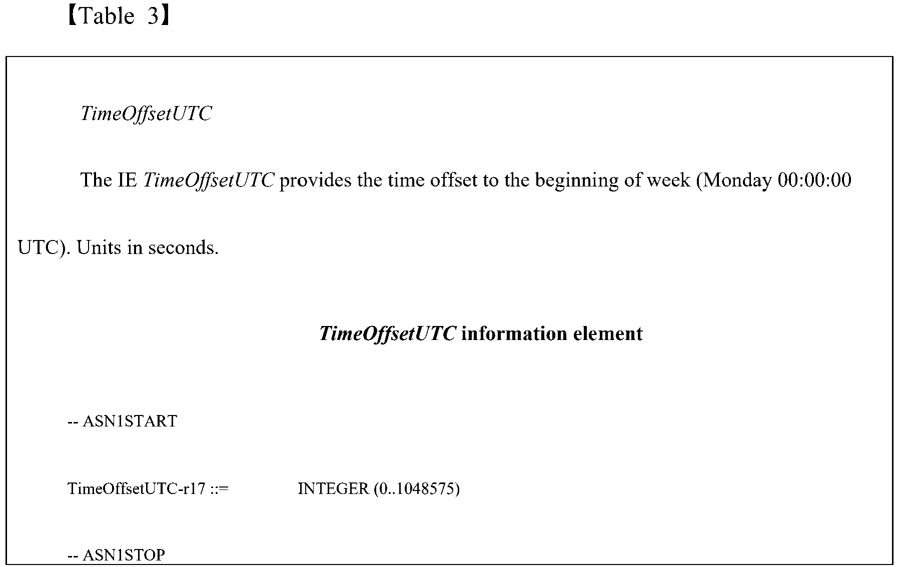

According to another embodiment, the valid time of the S&F mode may be indicated as a relative time. For example, the relative time may indicate a difference between a timing when the service by the NTN cell (e.g., the 't-service' IE) is terminated and a timing when the connection of the feeder link is resumed. In other words, the valid time of the S&F mode may be indicated as a relative time (e.g., an offset). As an example, the valid time of the S&F mode may be indicated as a relative value for an absolute value indicated through the t-service.

The satellite 520 may transmit information on the valid time of the S&F mode. According to an embodiment, the satellite 520 may broadcast the information on the valid time of the S&F mode through system information. For example, the system information may be SIB 31. For example, the system information may be SIB 32. For another example, the satellite 520 may broadcast information on a valid time of an S&F mode of the neighboring satellite through SIB 33. According to another embodiment, the satellite 520 may transmit the information on the valid time of the S&F mode through an RRC message (e.g., an RRC reconfiguration message). In a case that the ground station connected to the satellite 520 through the feeder link is changed or the satellite 520 is changed from the normal mode to the S&F mode, the satellite 520 may change an RRC configuration of a corresponding cell while maintaining the RRC connection state.

The satellite 520 may transmit information on the valid time of the S&F mode together with other information. According to an embodiment, the satellite 520 may transmit information on the valid time of the S&F mode together with an operation mode of the satellite 520 through a message (e.g., a system information (SI) message or an RRC message). The operation mode may include an indicator indicating whether it is the normal mode or the S&F mode. As an example, in a case that the operation mode indicates the S&F mode, the information on the valid time of the S&F mode may be included in the message. According to an embodiment, the satellite 520 may transmit the message (e.g., the system information (SI) message or the RRC message) together with information on the current state of the feeder link. The information on the state of the feeder link may include an indicator indicating whether the current state of the feeder link is available or unavailable. As an example, in a case that the information indicates that the state of the feeder link is unavailable, the information on the valid time of the S&F mode may be included in the message.

### 2. S&F mode and RRC states

When the satellite is switched to the S&F mode, it is necessary to define how the UE 510 in the RRC connection state operates. This is because the network side may not obtain new downlink data for the UE during the S&F mode. On the other hand, in a case of uplink data, the UE 510 may continue to perform data transmission to the network as long as the network allows. Since the satellite 520 serves as an RAN node, when the feeder link is disconnected, DRB requiring strict standby time may be released. When the data transmission is completed, the satellite 520 may release the RRC connection of the UE for the purpose of power saving. In a case of the UE 510 in the RRC connection state, as the network is switched to the S&F mode, the UE 510 may not be automatically switched to an idle state. When the satellite 520 is switched to the S&F mode through a network configuration, only the DRB that allows the standby time may be maintained.

FIG. 7 indicates an example of a radio resource control (RRC) connection state of an IoT user equipment (UE).

Referring to FIG. 7, an RRC layer may be in charge of signal management between UE 510 and a satellite 520. The RRC layer may be in charge of setting up, maintaining, and releasing a wireless connection, as well as handling mobility and security. A state (hereinafter, referred to as an RRC state) of the RRC layer may include an RRC connection state 710 corresponding to a connection mode and an RRC idle state 720 corresponding to a standby mode. Each state performs a different purpose in a communication process, and through switching between the states, the UE may communicate efficiently with the network while managing battery consumption. The UE 510 may perform switching between the RRC connection state 710 and the RRC idle state 720 according to a network activity. The switching may be triggered in the network by a factor such as a user data need, a signal activity, or a power saving need. For example, the switching from the RRC idle state 720 to the RRC connection state 710 occurs when the UE 510 needs to transmit and receive data. The UE 510 may switch to the connection state by transmitting an RRC connection request. For example, the switching from the RRC connection state 710 to the RRC idle state 720 may occur when the UE 510 is no longer involved in active communication. When a network side (e.g., the satellite 520) releases a wireless resource, the UE 520 may return to the standby mode for battery saving.

In the RRC idle state 720, the UE 510 does not actively transmit and receive user data, and a dedicated resource may not be allocated in the network. However, the UE 510 may still monitor a paging message and system information of the network. The UE 510 may maintain a battery life by using only a minimum amount of power. In the RRC idle state 720, the UE 510 may continuously monitor a signal strength of a neighboring cell and perform cell reselection to switch to a better cell as needed. In addition, in the RRC idle state 720, the UE 510 may receive the paging message from the network (e.g., the satellite 520) and perform paging reception to verify incoming calls, SMS, or mobile terminated data session information. The UE 510 may perform discontinuous reception (DRX) that saves power by maintaining an inactive state for the rest of the time after periodically waking up to check the paging message. When the UE 510 moves between different tracking areas, it may perform a tracking area update (TAU) procedure to update its position to the network (e.g., the satellite 520) so that the network may track the UE 510 for future communications.

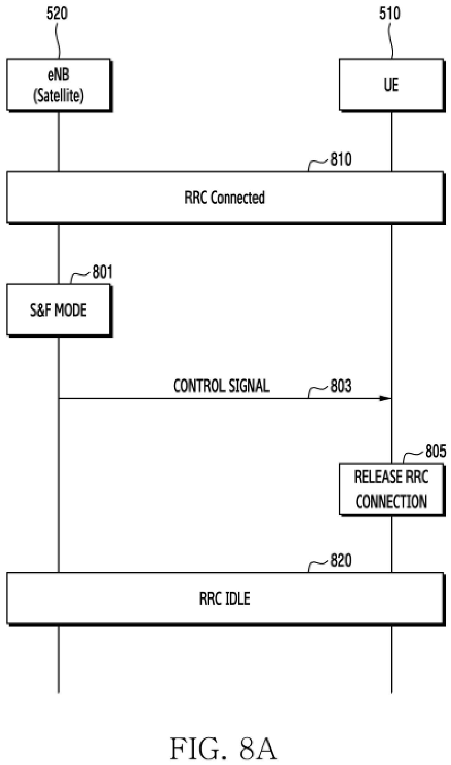

FIG. 8A indicates an example of a release of an RRC connection in an S&F mode. A satellite 520 may be configured to perform functions of an eNB. As an example, the eNB may be disposed on a board of the satellite 520, and entities of a core network (e.g., a core network 550) may be disposed on the ground. As an example, a portion of the eNB and the entities of the core network (or a portion of a particular entity (e.g., a mobile management entity (MME))) may be disposed on the board of the satellite 520, and other entities of the entities of the core network may be disposed on the ground.

Referring to FIG. 8A, in operation 810, UE 510 and the satellite 520 may communicate in an RRC connection state (e.g., an RRC connection state 710).

In operation 801, the satellite 520 may operate in the S&F mode. When entering the S&F mode, the satellite 520 may determine whether to release the RRC connection with the UE 510. In the S&F mode, the satellite 520 may not obtain new downlink data. However, the satellite 520 may obtain uplink data from the UE 510. The satellite 520 may determine whether to release the RRC connection based on a communication service connected to the UE 510. According to an embodiment, the satellite 520 may determine whether to release the RRC connection based on a state of a feeder link. As an example, the state of the feeder link may include an expected recovery time of the feeder link, a channel capacity of the feeder link, a time when the feeder link is disconnected, and/or an unavailable time of the feeder link. According to an embodiment, the satellite 520 may determine whether to release the RRC connection based on a state of a service link. As an example, in a case that a channel quality (e.g., RSRP, CQI, SINR) measured in the service link indicates a channel quality less than a threshold, the satellite 520 may determine to release the RRC connection. According to an embodiment, the satellite 520 may determine whether to release the RRC connection based on DRB. As an example, in a case that a packet delay budget of QCI of the DRB is less than a threshold, the satellite 520 may determine to release the RRC connection. According to an embodiment, the satellite 520 may determine whether to release the RRC connection based on a QoS flow. As an example, in a case that an allowable delay time according to 5QI associated with the QoS flow is less than a threshold, the satellite 520 may decide to release the RRC connection. According to an embodiment, the satellite 520 may determine whether to release the RRC connection based on a network slice. As an example, in a case that a slice service type (SST) and/or a slice differentiator (SD) of the network slice indicates a delay-sensitive service (e.g., the SST indicates URLLC), the satellite 520 may determine to release the RRC connection. Hereinafter, the satellite 520 may determine to release the RRC connection with the UE 510.

In operation 803, the satellite 520 may transmit a control signal to the UE 510. The satellite 520 may transmit the control signal to release the RRC connection. According to an embodiment, the control signal may be an RRC message for releasing the RRC connection. According to an embodiment, the RRC message may include configuration information for configuring the S&F mode.

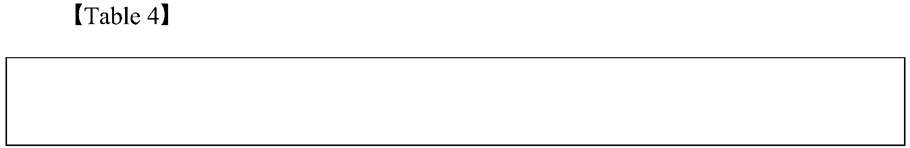

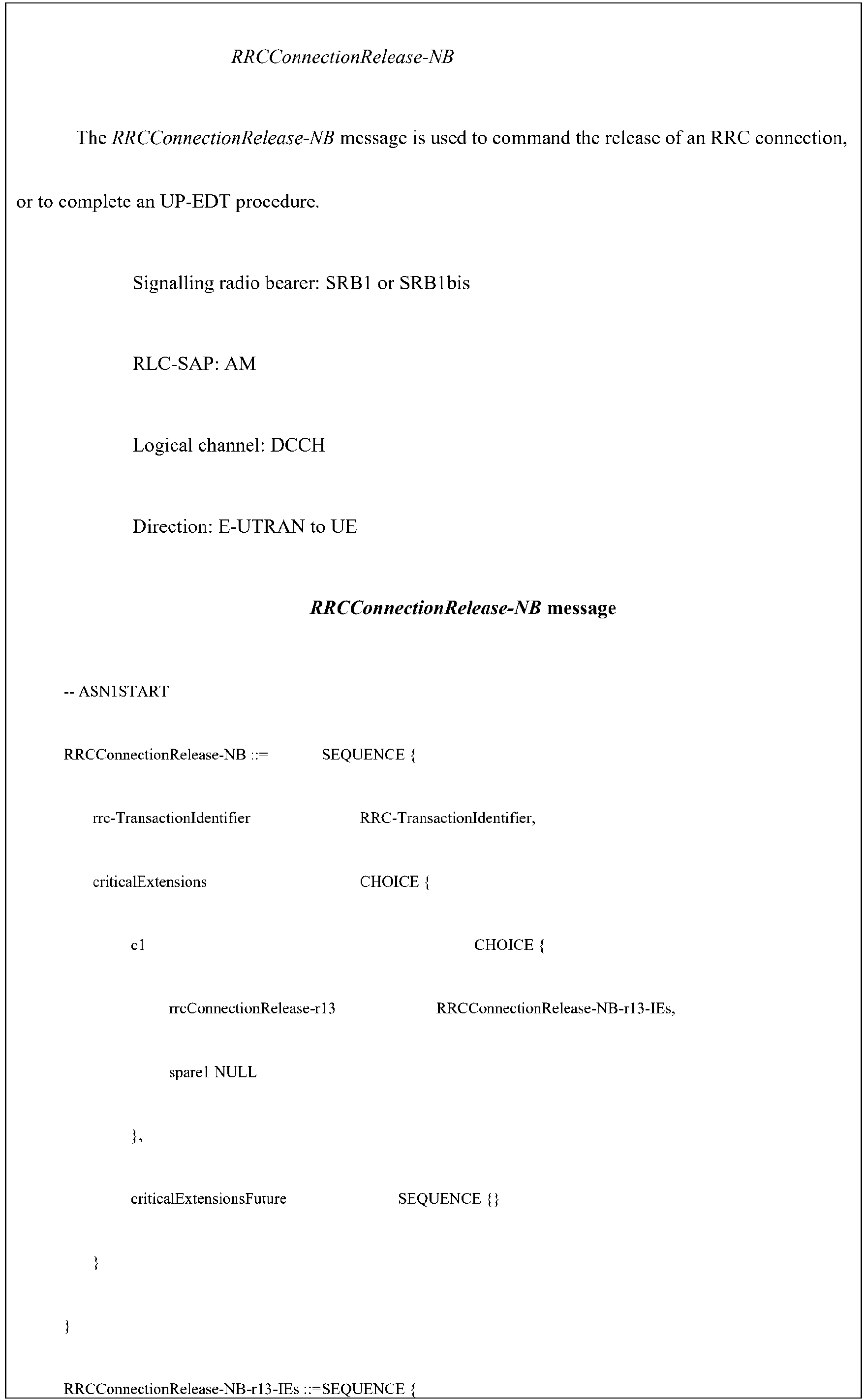

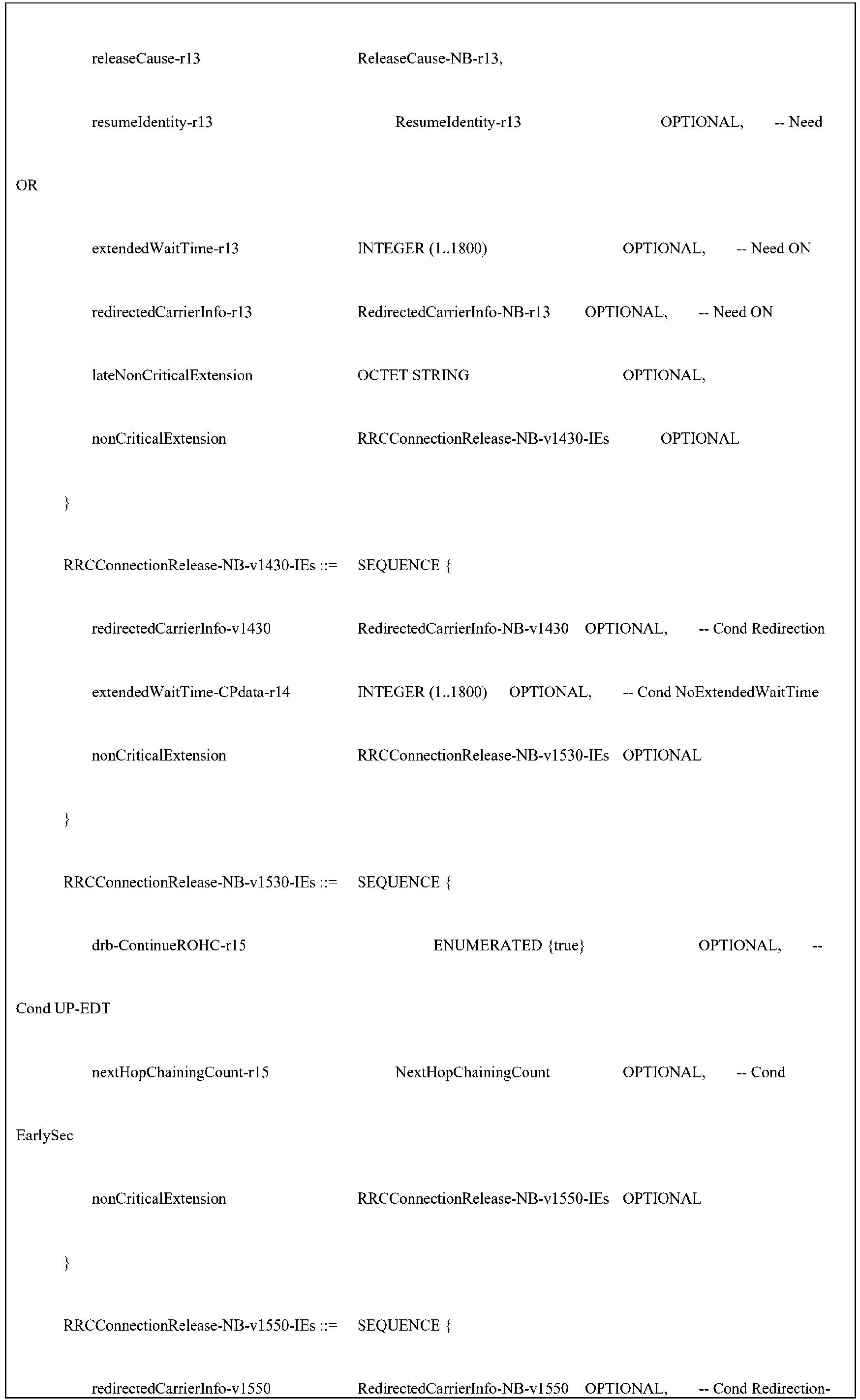

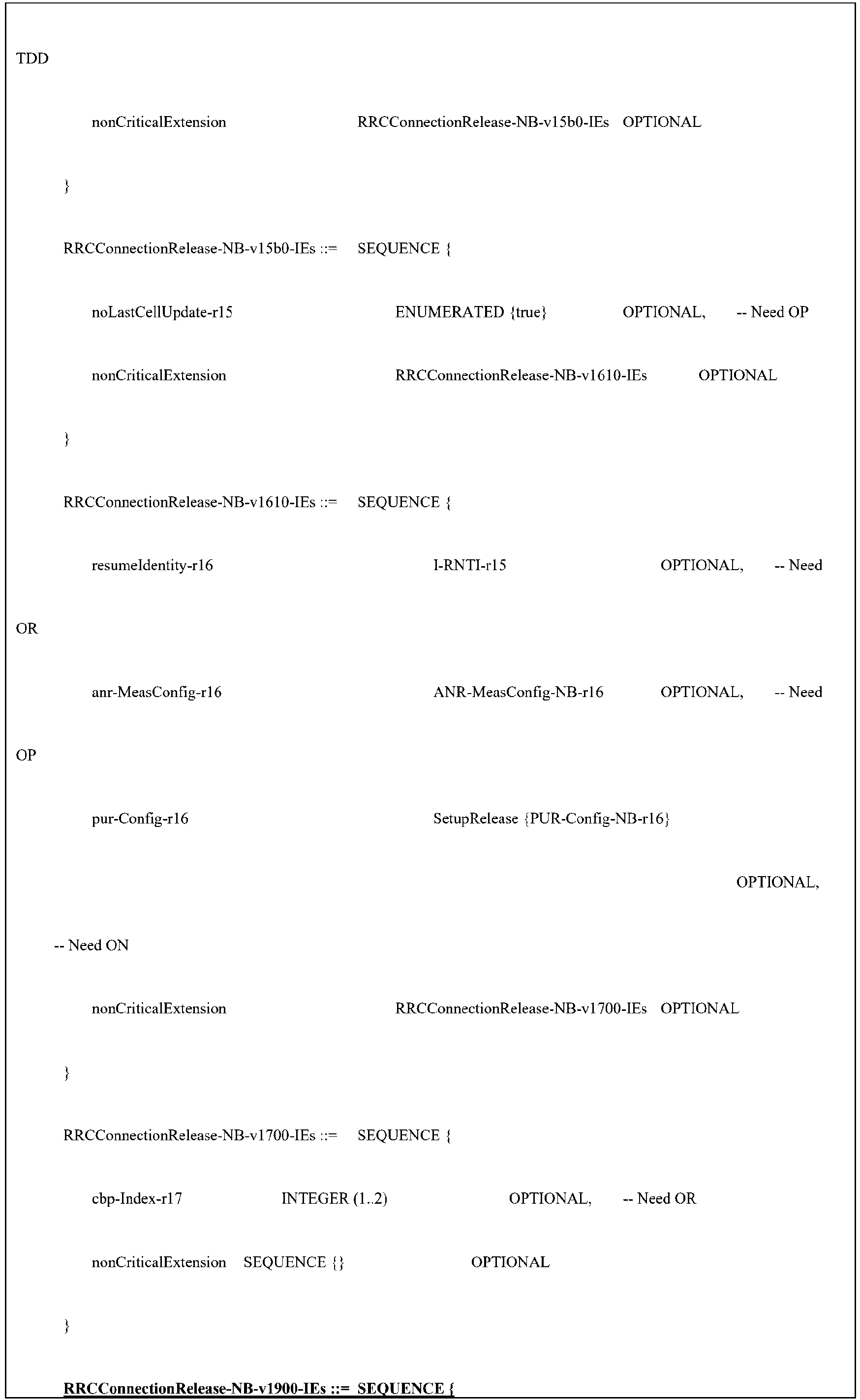

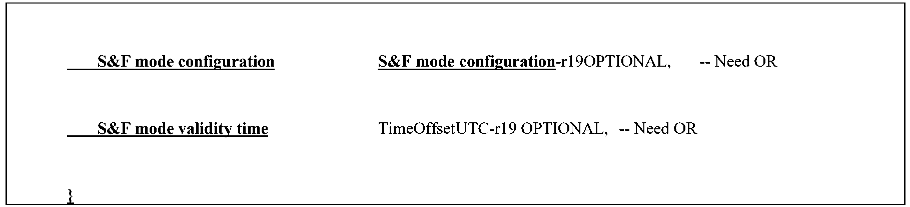

According to an embodiment, the RRC message for releasing the RRC connection may include 'StoreandForward' as a cause value for the release.

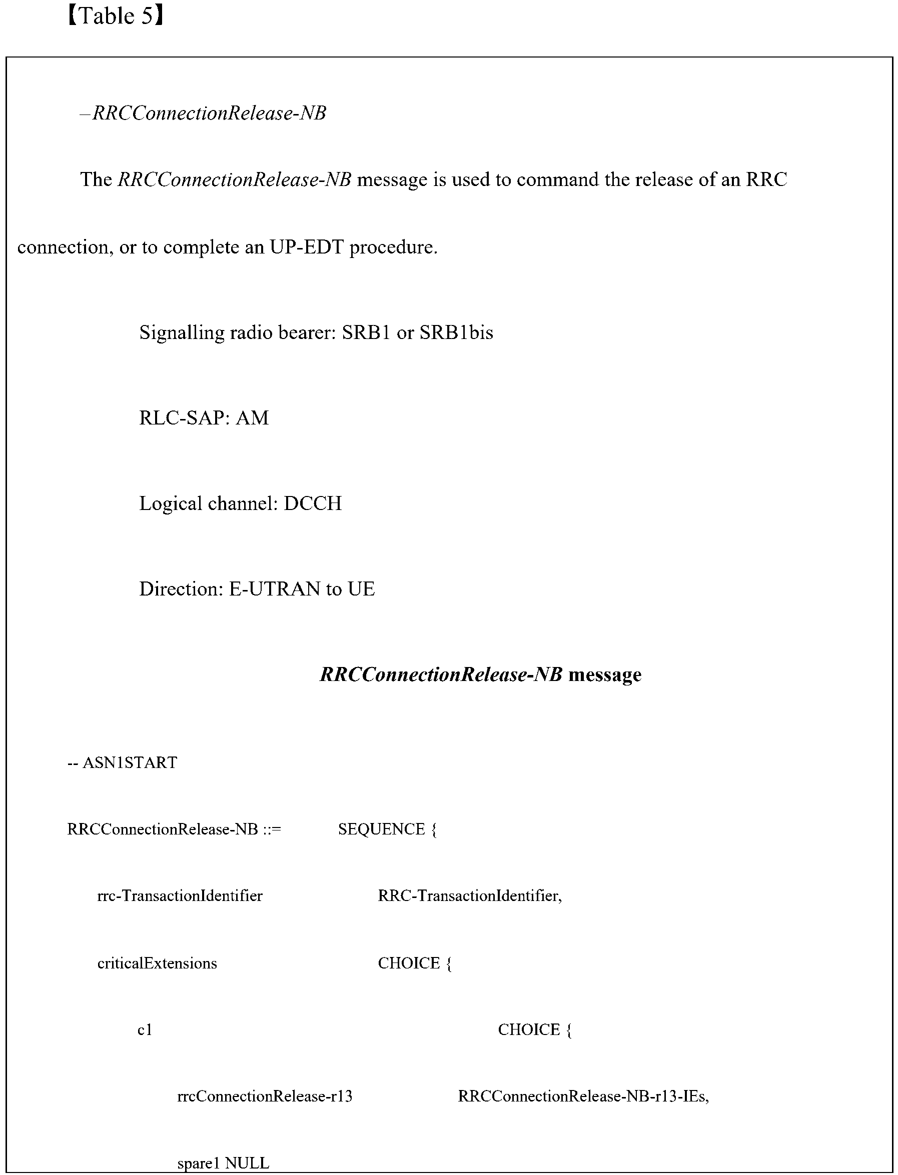

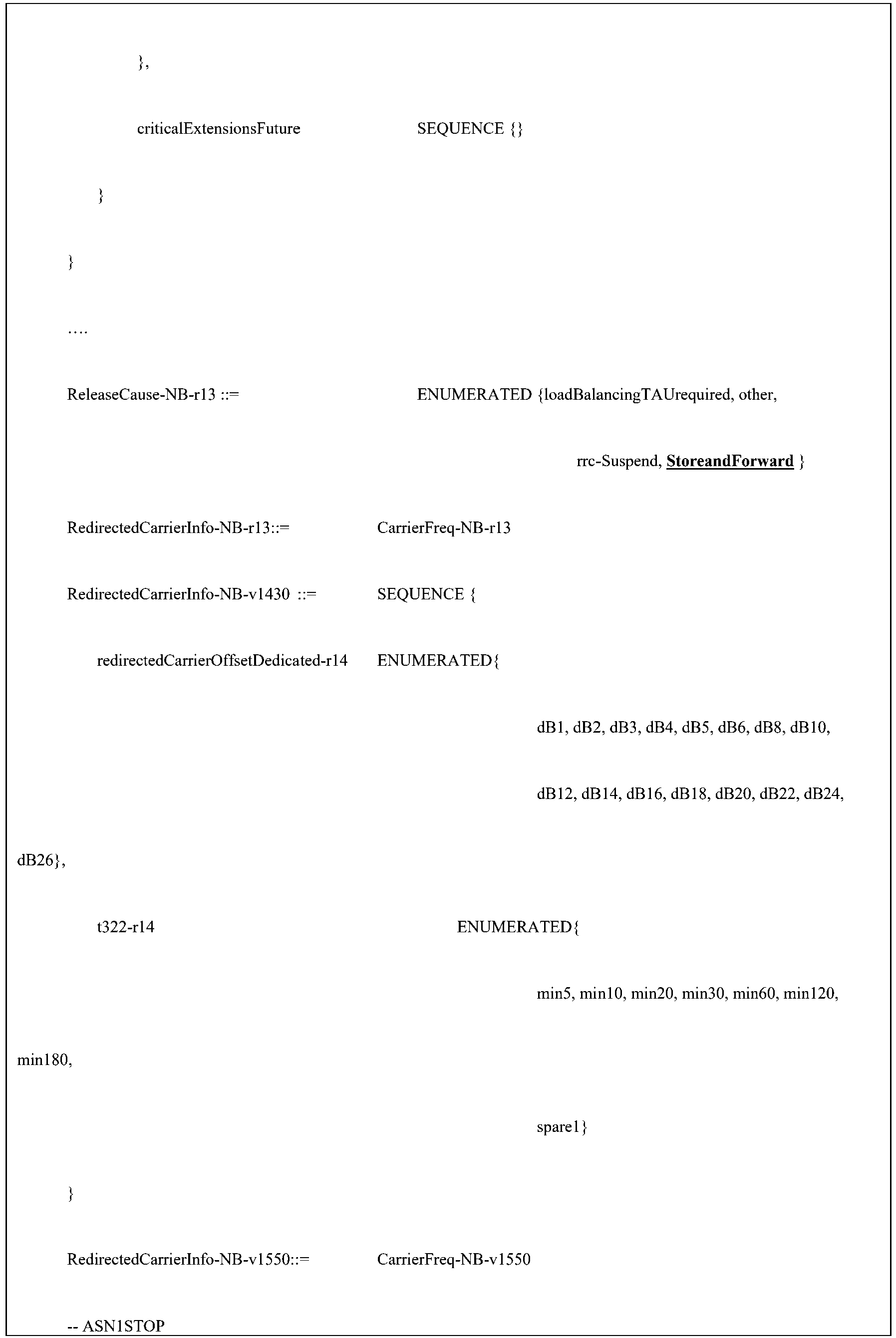

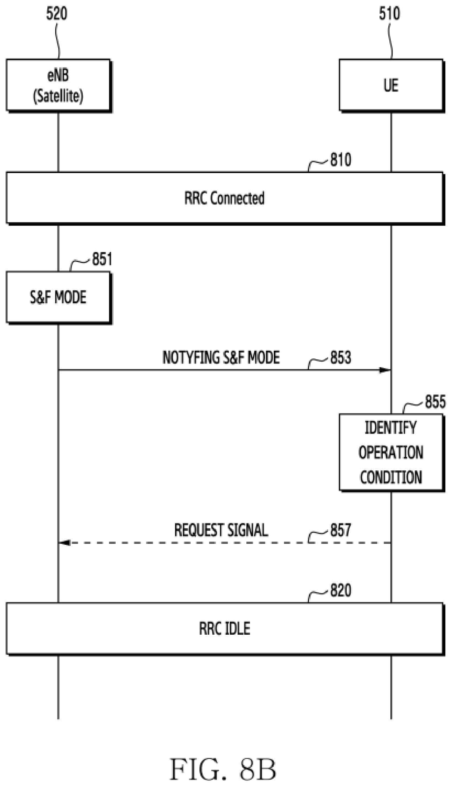

As a non-limiting example, unlike as illustrated in FIG. 8, the satellite 520 may transmit configuration information for configuring the S&F mode to the UE 510 as a separate message from the RRC message for releasing the RRC connection.

In operation 805, the UE 510 may release the RRC connection. The UE 510 may perform a procedure for releasing the RRC connection in response to the control signal. As the connection of the RRC is released, a connection state of the UE 510 may be changed from the RRC connection state to an RRC idle state.

In operation 820, in operation 810, the UE 510 may be in the RRC idle state (e.g., an RRC idle state 720). The UE 510 may be configured to perform the operations in the RRC idle state 710 illustrated in FIG. 7. For example, the UE 510 may monitor a paging message and/or system information. For example, the UE 510 may perform cell reselection.

In FIG. 8A, an example of releasing the RRC connection has been described, but embodiments of the present disclosure are not limited thereto. For example, in addition to releasing the RRC connection, a low-power mode of the UE 510 may be triggered through MAC CE or DCI. As another example, an inactivity timer for the S&F mode may be configured. The inactivity timer may induce the release of the RRC connection of the UE 510 in a case that there is no data transmission for a predetermined time.

FIG. 8B indicates an example of a request for a release of an RRC connection in an S&F mode. A satellite 520 may be configured to perform functions of an eNB. As an example, the eNB may be disposed on a board of the satellite 520, and entities of a core network (e.g., a core network 550) may be disposed on the ground. As an example, a portion of the eNB and the entities of the core network (or a portion of a particular entity (e.g., a mobile management entity (MME))) may be disposed on the board of the satellite 520, and other entities of the entities of the core network may be disposed on the ground.

Referring to FIG. 8B, in operation 810, UE 510 and the satellite 520 may communicate in an RRC connection state (e.g., an RRC connection state 710).

In operation 851, the satellite 520 may operate in the S&F mode. In the S&F mode, the satellite 520 may not obtain new downlink data. However, the satellite 520 may obtain uplink data from the UE 510. Whether to release the RRC connection may be determined according to whether there is the uplink data of the UE 510. In a case that there is no data transmission/reception for a predetermined time, the satellite 520 may release the RRC connection through a preset parameter (e.g., an inactivity timer). As an example, in a case that there is no traffic with the UE 510, the eNB of the satellite 520 may transmit a UE context release request to the MME and receive a UE context release completion message from the MME. Thereafter, the satellite 520 may transmit an RRC connection release message. However, not only does this procedure have to wait for expiration of the inactivity timer, but it may also require more time to release the RRC connection. Accordingly, the satellite 520 may monitor a state of the UE 510 and determine whether to release the RRC connection based on the request of the UE 510.

In operation 853, the satellite 520 may transmit, to the satellite 520, a message for notifying the UE 510 of an operation of the S&F mode. According to an embodiment, the message may include a message related to an operation condition. For example, the operation condition may indicate a triggering condition of the request of the release of the RRC connection of the UE 510. For example, the message may include a list of data services for maintaining the RRC connection without releasing the RRC connection even in the S&F mode. For example, the list may include a DRB list, a QoS flow list, a Single Network Slice Selection Assistance Information (S-NSSAI) list, and/or a resource area (e.g., BWP, PRB, or a sub-band) list. For example, the message may include a threshold of a metric (e.g., RSRP, or SINR). When the channel quality greater than or equal to the threshold of the metric is measured, the UE 510 may perform communication without requesting the release the RRC connection. When a channel quality less than the threshold of the metric is measured, the UE 510 may request the release of the RRC connection. For example, the message may include a threshold of a data traffic. In a case that an amount of data to be transmitted (e.g., an amount of data pending in a buffer, a transport block size (TBS)) is less than the threshold of the data traffic, the UE 510 may perform communication without requesting the release of the RRC connection. In a case that the amount of the data to be transmitted is greater than or equal to the threshold of the data traffic, the UE 510 may request to release the RRC connection.

In operation 855, the UE 510 may identify an operation condition. The UE 510 may determine whether the operation condition is satisfied based on the message received in the operation 853. The UE 510 may perform operation 857 based on the message received in the operation 853, if the operation condition is satisfied. For example, in a case that the channel quality less than the threshold of the metric is measured, the UE 510 may perform the operation 857. For example, in a case that the amount of the data to be transmitted is greater than or equal to the threshold of the data traffic, the UE 510 may perform the operation 857. As a non-limiting example, the UE 510 may identify that there is no more data after completing the uplink transmission. The UE 510 may determine that the operation condition is satisfied. According to an embodiment, when a time elapses as much as the inactivity timer after the uplink transmission is completed, the RRC connection may be released even if there is no request from the UE 510. Accordingly, the request of the UE 510 may be meaningful when requested within a shorter time than the inactivity timer. The UE 510 may determine whether the operation condition is satisfied based on the time of the inactivity timer (e.g., by comparing a time related to a round-trip time (RTT) between the UE 510 and the UE 510, and a time of the inactivity timer). Although not illustrated in FIG. 8, the UE 510 may perform uplink data communication when the operation condition is not satisfied. After repeatedly determining whether the operation condition is satisfied, the operation 875 may be performed when the operation condition is satisfied.

In operation 857, the UE 510 may transmit a request signal according to the determination that the operation condition is satisfied. In order to request the quick release of the RRC connection, the UE 510 may transmit the request signal. For example, the request signal may include an indicator directly requesting RRC release. For example, the request signal may include an indicator indicating that a condition set in the message of the operation 853 is satisfied. The satellite 520 may determine whether to transmit the RRC connection release message based on the indicator. For example, the request signal may transmit information on the measured channel quality. The satellite 520 may determine whether to transmit the RRC connection release message based on the information. For example, the request signal may include a size of an amount of data pending in an uplink buffer of the UE 510. The satellite 520 may determine whether to transmit the RRC connection release message based on the size.

The request signal according to various embodiments of the present disclosure may be performed through one of various procedures. According to an embodiment, the request signal may be performed through an RRC message. A separate RRC message for requesting the release of the RRC connection in the S&F mode may be defined. According to an embodiment, the request signal may perform a random access procedure. A request for the release of the RRC connection may be indicated through a random access preamble or a message 3. According to an embodiment, the request signal may be performed through a predefined sequence. The UE 510 may provide the satellite 520 with a request the release of the RRC connection by transmitting the predefined sequence (e.g., an m value of a sequence, cyclic shift (CS) value, or a pattern) on PUCCH. According to an embodiment, the request signal may be performed through an MAC control element (CE). For example, the MAC CE may include a buffer status reporting (BSR) MAC control element (CE). The BSR may be used for requesting the release of the RRC connection as well as an amount of uplink data. As the amount (e.g., 0 or a specified value) of the uplink data less than a threshold is included in the BSR MAC CE, the satellite 520 may indirectly identify that the BSR MAC CE is the request for the release of the RRC connection.

The satellite 520 may determine whether to release the RRC connection based on the request signal. As the release of the RRC connection is determined by the satellite 520, the satellite 520 may transmit the RRC connection release message to the UE 510.

In operation 820, in operation 810, the UE 510 may be in an RRC idle state (e.g., an RRC idle state 720). The UE 510 may be configured to perform the operations in the RRC idle state 710 illustrated in FIG. 7. For example, the UE 510 may monitor a paging message and/or system information. For example, the UE 510 may perform cell reselection.

In FIG. 8A, an example of releasing the RRC connection has been described, but embodiments of the present disclosure are not limited thereto. For example, in addition to the request of the release of the RRC connection, a low-power mode of the UE 510 may be triggered through MAC CE or DCI. As another example, an inactivity timer for the S&F mode may be configured. The inactivity timer for the S&F mode may induce the release of the RRC connection of the UE 510 in a case that there is no data transmission for a predetermined time. A length of the inactivity timer for the S&F mode may be set shorter than a length of a normal operation in which both a service link and a feeder link are possible and/or a length of an inactivity timer set between a general ground base station and a terminal.

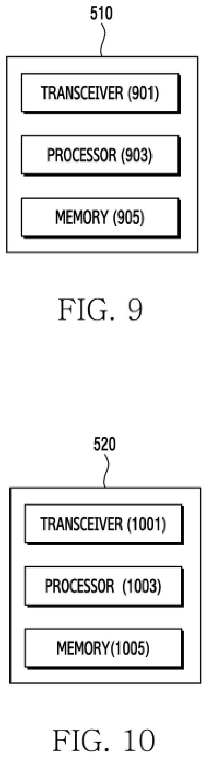

FIG. 9 illustrates an example of components of UE (e.g., UE 510).

Referring to FIG. 9, the UE 510 may include a transceiver 901, a processor 903, and memory 905. The transceiver 901 performs functions for transmitting and receiving signals through a wireless channel. For example, the transceiver 901 up-converts a baseband signal into an RF band signal and then transmits it through an antenna, and down-converts the RF band signal received through the antenna into a baseband signal. For example, the transceiver 901 may include a transmission filter, a reception filter, an amplifier, a mixer, an oscillator, a digital to analog converter (DAC), an analog to digital converter (ADC), and the like.

The transceiver 901 may include a plurality of transmission/reception paths. Furthermore, the transceiver 901 may include an antenna unit. The transceiver 901 may include at least one antenna array configured with a plurality of antenna elements. In terms of hardware, the transceiver 901 may be configured with digital circuitry and analog circuitry (e.g., a radio frequency integrated circuit (RFIC)). Herein, the digital circuitry and the analog circuitry may be implemented as one package. Also, the transceiver 901 may include a plurality of RF chains. The transceiver 901 may perform beamforming. The transceiver 901 may apply a beamforming weight to a signal to be transmitted/received in order to give a directivity according to a setting of the processor 903. According to an embodiment, the transceiver 901 may include a radio frequency (RF) block (or an RF unit). According to an embodiment, the transceiver 901 may support satellite communication. The UE 510 may transmit a signal to a satellite (e.g., a satellite 520) through the transceiver 901 or receive a signal from the satellite (e.g., the satellite 520).

The transceiver 901 may transmit and receive a signal on a radio access network. For example, the transceiver 901 may receive a downlink signal. The downlink signal may include a synchronization signal (SS), a reference signal (RS) (e.g., a cell-specific reference signal (CRS), or a demodulation (DM)-RS), system information (e.g., MIB, SIB, remaining system information (RMSI), or other system information (OSI)), a configuration message, control information, or downlink data. Also, for example, the transceiver 901 may transmit an uplink signal. The uplink signal may include a random access-related signal (e.g., a random access preamble (RAP) (or a message 1 (Msg1), a message 3 (Msg3)), a reference signal (e.g., a sounding reference signal (SRS), DM-RS), uplink control information (UCI), (e.g., channel state information (CSI)), a hybrid automatic repeat request (HARQ), a scheduling request (SR), or a power headroom report (PHR). Only the transceiver 901 is illustrated in FIG. 9, but according to another implementation, the UE 510 may include two or more RF transceivers.

The processor 903 controls overall operations of the UE 510. The processor 903 may be referred to as a control unit. For example, the processor 903 transmits and receives a signal through the transceiver 901. Furthermore, the processor 903 writes and reads data to and from the memory 905. In addition, processor 903 may perform functions of a protocol stack required by a communication standard. Only the processor 903 is illustrated in FIG. 9, but according to another implementation, the UE 510 may include two or more processors. The processor 903 is a set of instructions or code stored in the memory 905, which is at least temporarily resided in the processor 903, or a storage area storing the instructions/code, or a portion of circuitry configuring the processor 903. In addition, processor 903 may include various modules for performing communication. The processor 903 may control the UE 510 to perform operations according to embodiments.

The memory 905 stores data such as a basic program, an application program, and setting information for an operation of the UE 510. The memory 905 may be referred to as a storage unit. The memory 905 may be configured with a volatile memory, a non-volatile memory, or a combination of a volatile memory and a non-volatile memory. In addition, the memory 905 provides data stored according to a request of the processor 903. According to an embodiment, the memory 905 may include memory for a condition, a command, or a setting value related to a satellite communication transmission method.

FIG. 10 illustrates an example of components of a satellite (e.g., a satellite 520).

Referring to FIG. 10, the satellite 520 may include at least one transceiver 1001, at least one processor 1003, and at least one memory 1005. Hereinafter, a component is described in a singular, but implementation of a plurality of components or sub-components is not excluded.

The transceiver 1001 performs functions for transmitting and receiving a signal through a wireless channel. For example, the transceiver 1001 performs a conversion function between a baseband signal and a bit stream according to a physical layer specification of a system. For example, when transmitting data, the transceiver 1001 generates complex symbols by encoding and modulating a transmission bit stream. In addition, when receiving data, the transceiver 1001 restores the received bit stream by demodulating and decoding the baseband signal. In addition, the transceiver 1001 up-converts the baseband signal into a radio frequency (RF) band signal and then transmits it through an antenna, and down-converts the RF band signal received through the antenna into a baseband signal. To this end, the transceiver 1001 may include a transmission filter, a reception filter, an amplifier, a mixer, an oscillator, a digital to analog converter (DAC), an analog to digital converter (ADC), and the like. Also, the transceiver 1001 may include a plurality of transmission/reception paths. Furthermore, the transceiver 1001 may include at least one antenna array configured with a plurality of antenna elements. In terms of hardware, the transceiver 1001 may be configured with a digital unit and an analog unit, and the analog unit may be configured with a plurality of sub-units according to an operating power, an operating frequency, and the like. The transceiver 1001 transmits and receives a signal as described above. Accordingly, the transceiver 1001 may be referred to as a 'transmission unit', a 'reception unit', or a 'transmission/reception unit'.

The transceiver 1001 does not exclude a probability of transmitting or receiving a signal not only through the wireless channel but also via a backhaul network, optical communication, the Ethernet, or other wired paths. For example, the transceiver 1001 may support optical communication for signaling of the satellite 520 with another satellite. The satellite 520 may perform optical communication with the other satellite by using a laser beam through the transceiver 1001. For example, wired communication between components in the satellite 520 may be supported. The transceiver 1001 may convert a bit stream transmitted from the satellite 520 to another node, for example, another access node, another base station, an upper node, a core network, and the like, into a physical signal, and convert the physical signal received from the other node into a bit stream.

The transceiver 1001 may support communication between the satellite 520 and the UE 510. The transceiver 1001 may support communication between the satellite 520 and the UE 510 as well as communication between the satellite 520 and a ground segment (e.g., a network entity of an NTN gateway 530, or a core network 550). As a non-limiting example, circuitry for communication with the UE 510 in the transceiver 1001 and circuitry for communication with the ground segment (e.g., the network entity of the NTN gateway 530, or the core network 550) may be distinguished.

The processor 1003 may control overall operations of the satellite 520. For example, the processor 1003 writes and reads data to and from the memory 1005. For example, the processor 1003 transmits and receives a signal through the transceiver 1001. Although FIG. 10 illustrates one processor, embodiments of the present disclosure are not limited thereto. The satellite 520 may include at least one processor (e.g., including a plurality of processors) to perform embodiments of the present disclosure. The processor 1003 may be referred to as a control unit or a control means. According to embodiments of the present disclosure, the processor 1003 may control the satellite 520 to perform at least one of operations or methods according to embodiments of the present disclosure.

The memory 1005 may store data such as a basic program, an application program, and setting information for an operation of the satellite 520. The memory 1005 may store various data used by at least one component (e.g., the transceiver 1001 or the processor 1003). The data may include, for example, input data or output data for software and related instructions. The memory 1005 may be configured with a volatile memory, a non-volatile memory, or a combination of a volatile memory and a non-volatile memory. And the memory 1005 may provide stored data in response to a request from the processor 1003.

According to embodiments of the present disclosure, a device of a satellite configured to provide a non-terrestrial network (NTN) access and to perform functions of an evolved node B (eNB) is provided. The device may comprise memory comprising instructions, at least one processor, and at least one transceiver. The instructions, when executed by the at least one processor, may cause the device to identify a store and forward (S&F) mode in a radio resource control (RRC) connection state with a user equipment (UE), transmit, to the UE, a message indicating that the satellite operates in the S&F mode, after transmitting the message, receive, from the UE, a request signal for a release of the RRC connection, and transmit, to the UE, an RRC connection release message for releasing the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to an embodiment, the message may include a data inactivity timer for the S&F mode. A value of the data inactivity timer may be set to a value shorter than an inactivity timer used for a release of the RRC connection in another mode different from the S&F mode.

According to an embodiment, the information on the condition for triggering the request of the release of the RRC connection may include at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

According to an embodiment, the request signal may correspond to a buffer status reporting (BSR) medium access control (MAC) control element (CE) including an uplink data amount of the UE.

According to an embodiment, the cause value of the release of the RRC connection may indicate the S&F mode.

According to an embodiment, a user equipment (UE) for performing a non-terrestrial network (NTN) access is provided. The UE may comprise memory comprising instructions, at least one processor, and at least one transceiver. The instructions, when executed by the at least one processor, may cause the UE to receive, from a satellite configured to perform functions of an evolved node B (eNB) in a radio resource control (RRC) connection state, a message indicating that the satellite operates in a store and forward (S&F) mode, after receiving the message, transmit, to the satellite, a request signal for a release of the RRC connection, and receive, from the satellite, an RRC connection release message regarding the release of the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to an embodiment, the message may include a data inactivity timer for the S&F mode. A value of the data inactivity timer may be set to a value shorter than an inactivity timer used for a release of the RRC connection in another mode different from the S&F mode.

According to an embodiment, the information on the condition for triggering the request of the release of the RRC connection may include at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

According to an embodiment, the request signal may correspond to a buffer status reporting (BSR) medium access control (MAC) control element (CE) including an uplink data amount of the UE.

According to an embodiment, the cause value of the release of the RRC connection may indicate the S&F mode.

According to embodiments of the present disclosure, a method performed by a satellite configured to provide a non-terrestrial network (NTN) access and perform functions of an evolved node B (eNB) is provided. The method may comprise identifying a store and forward (S&F) mode in a radio resource control (RRC) connection state with a user equipment (UE), transmitting, to the UE, a message indicating that the satellite operates in the S&F mode, after transmitting the message, receiving, from the UE, a request signal for a release of the RRC connection, transmitting, to the UE, an RRC connection release message for releasing the RRC connection, and the RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to an embodiment, the message may include a data inactivity timer for the S&F mode. A value of the data inactivity timer may be set to a value shorter than an inactivity timer used for a release of the RRC connection in another mode different from the S&F mode.

According to an embodiment, the information on the condition for triggering the request of the release of the RRC connection may include at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

According to an embodiment, the request signal may correspond to a buffer status reporting (BSR) medium access control (MAC) control element (CE) including an uplink data amount of the UE.

According to an embodiment, the cause value of the release of the RRC connection may indicate the S&F mode.

According to embodiments of the present disclosure, a method performed by a user equipment (UE) for performing a non-terrestrial network (NTN) access is provided. The method may comprise receiving, from a satellite configured to perform functions of an evolved node B (eNB) in a radio resource control (RRC) connection state, a message indicating that the satellite operates in a store and forward (S&F) mode, after receiving the message, transmitting, to the satellite, a request signal for a release of the RRC connection, and receiving, from the satellite, an RRC connection release message regarding the release of the RRC connection. The RRC connection release message may include a cause value of the release of the RRC connection. The message may include at least one of an indicator indicating that a cell provided by the satellite supports the S&F mode, information on a validity time of a feeder link of the satellite, or information on a condition for triggering a request of the release of the RRC connection.

According to an embodiment, the message may include a data inactivity timer for the S&F mode. A value of the data inactivity timer may be set to a value shorter than an inactivity timer used for a release of the RRC connection in another mode different from the S&F mode.

According to an embodiment, the information on the condition for triggering the request of the release of the RRC connection may include at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

According to an embodiment, the request signal may correspond to a buffer status reporting (BSR) medium access control (MAC) control element (CE) including an uplink data amount of the UE.

According to an embodiment, the cause value of the release of the RRC connection may indicate the S&F mode.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A device of a satellite configured to provide a non-terrestrial network (NTN) access and to perform functions of an evolved node B (eNB), comprising:
memory comprising instructions;
at least one processor; and
at least one transceiver,
wherein the instructions, when executed by the at least one processor, cause the device to:
identify a store and forward (S&F) mode in a radio resource control (RRC) connection state with a user equipment (UE),
transmit, to the UE, a message indicating that the satellite operates in the S&F mode,
after transmitting the message, receive, from the UE, a request signal for a release of the RRC connection,
transmit, to the UE, an RRC connection release message for releasing the RRC connection,
wherein the RRC connection release message includes a cause value of the release of the RRC connection, and
wherein the message includes at least one of an indicator indicating that a cell provided by the satellite supports the S&F mode, information on a validity time of a feeder link of the satellite, or information on a condition for triggering a request of the release of the RRC connection.

2. The device of claim 1,
wherein the message includes a data inactivity timer for the S&F mode, and
wherein a value of the data inactivity timer is set to a value shorter than an inactivity timer used for a release of the RRC connection in another mode different from the S&F mode.

3. The device of claim 1,
wherein the information on the condition for triggering the request of the release of the RRC connection includes at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

4. The device of claim 1,
wherein the request signal corresponds to a buffer status reporting (BSR) medium access control (MAC) control element (CE) including an uplink data amount of the UE.

5. The device of claim 1,
wherein the cause value of the release of the RRC connection indicates the S&F mode.

6. A user equipment (UE) for performing a non-terrestrial network (NTN) access, comprising:
memory comprising instructions,
at least one processor, and
at least one transceiver,
wherein the instructions, when executed by the at least one processor, cause the UE to:
receive, from a satellite configured to perform functions of an evolved node B (eNB) in a radio resource control (RRC) connection state, a message indicating that the satellite operates in a store and forward (S&F) mode,
after receiving the message, transmit, to the satellite, a request signal for a release of the RRC connection,
receive, from the satellite, an RRC connection release message regarding the release of the RRC connection,
wherein the RRC connection release message includes a cause value of the release of the RRC connection, and
wherein the message includes at least one of an indicator indicating that a cell provided by the satellite supports the S&F mode, information on a validity time of a feeder link of the satellite, or information on a condition for triggering a request of the release of the RRC connection.

7. The UE of claim 6,
wherein the message includes a data inactivity timer for the S&F mode, and
wherein a value of the data inactivity timer is set to a value shorter than an inactivity timer used for a release of the RRC connection in another mode different from the S&F mode.

8. The UE of claim 6,
wherein the information on the condition for triggering the request of the release of the RRC connection includes at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

9. The UE of claim 6,
wherein the request signal corresponds to a buffer status reporting (BSR) medium access control (MAC) control element (CE) including an uplink data amount of the UE.

10. The UE of claim 6,
wherein the cause value of the release of the RRC connection indicates the S&F mode.

11. A method performed by a satellite configured to provide a non-terrestrial network (NTN) access and perform functions of an evolved node B (eNB), comprising:
identifying a store and forward (S&F) mode in a radio resource control (RRC) connection state with a user equipment (UE),
transmitting, to the UE, a message indicating that the satellite operates in the S&F mode,
after transmitting the message, receiving, from the UE, a request signal for a release of the RRC connection,
transmitting, to the UE, an RRC connection release message for releasing the RRC connection,
wherein the RRC connection release message includes a cause value of the release of the RRC connection, and
wherein the message includes at least one of an indicator indicating that a cell provided by the satellite supports the S&F mode, information on a validity time of a feeder link of the satellite, or information on a condition for triggering a request of the release of the RRC connection.

12. The method of claim 11,
wherein the message includes a data inactivity timer for the S&F mode, and
wherein a value of the data inactivity timer is set to a value shorter than an inactivity timer used for a release of the RRC connection in another mode different from the S&F mode.

13. The method of claim 11,
wherein the information on the condition for triggering the request of the release of the RRC connection includes at least one of a data radio bearer (DRB) list, a quality of service (QoS) Flow list, a single network slice selection assistance information (S-NSSAI) list, a bandwidth part (BWP) list, a physical resource block (PRB) list, a sub-band list, a threshold of an uplink data amount , or a threshold of a metric for channel quality.

14. The method of claim 11,
wherein the request signal corresponds to a buffer status reporting (BSR) medium access control (MAC) control element (CE) including an uplink data amount of the UE.

15. The method of claim 11,
wherein the cause value of the release of the RRC connection indicates the S&F mode.
